# EUROPEAN PATENT APPLICATION

(11) **EP 4 467 609 A1**
(43) Date of publication of application: **27.11.2024**
(21) Application number: 23740306.8
(22) Date of filing: 12.01.2023
(51) Int. Cl.: C08L 59/04, C08G 2/00, C08J 5/00, C08J 5/04, C08K 5/13, C08K 5/16, C08K 7/02, C08L 1/00, C08L 1/02, C08L 1/08, C08L 71/00, C08L 71/02, F16H 55/06

(54) **POLYACETAL RESIN COMPOSITION**

(30) Priority: 17.01.2022 JP 2022005245; 24.06.2022 JP 2022102123; 13.07.2022 JP 2022112669; 25.11.2022 JP 2022188204
(71) Applicant: Asahi Kasei Kabushiki Kaisha, Tokyo 1000006 (JP)
(72) Inventor: KUSUMOTO, Sara, Tokyo 100-0006 (JP)
(74) Representative: D Young & Co LLP
(86) International application number: PCT/JP2023/000625
(87) International publication number: WO 2023/136298

(57) **Abstract**

The present invention provides: a polyacetal resin composition that achieves a highly dispersed state of cellulose in a polyacetal resin, and that achieves, at a high level, both high temperature rigidity and toughness when being under a load; and a method for producing same. This polyacetal resin composition contains: 100 parts by mass of a polyacetal resin (a); 1-150 parts by mass of fine cellulose fibers (b) having a fiber diameter of 2-1000 nm; and 0.1-100 parts by mass of a polyethylene glycol (c). An ethylene ratio R (%) which is the ratio of the number of oxyethylene units in the polyacetal resin (a) with respect to the total number of oxymethylene units and oxyethylene units in the polyacetal resin (a), and an oxyethylene repeating unit number n of the polyethylene glycol (c) satisfy the relationship of formula: (R+0.5)/0.015 ≤ n ≤ (R+ 10)/0.015.

## Description

### FIELD

The present invention relates to a polyacetal resin composition and a production method therefor.

### BACKGROUND

Polyacetal resins have excellent properties such as mechanical properties, thermal properties, electrical properties, sliding properties, and moldability, and are widely used mainly as structural materials and mechanical parts in electrical equipment, automobile parts, and precision machinery parts. In particular, polyacetal resins are widely used in gear applications. The characteristics required for gear products are becoming more sophisticated year by year, and, for example, they are increasingly required to withstand high loads in high-temperature regions exceeding 100°C. Further, the gear products are required to have long-term properties which can withstand repeated impacts applied on gear blades, and are also required to have sufficient toughness.

Patent Literature 1 describes a polyacetal resin composition in which glass fibers are blended with a polyacetal resin, Patent Literature 2 describes a polyacetal resin composition in which a specific cellulose powder is blended with a polyacetal resin, Patent Literature 3 describes a polyacetal resin composition in which fine cellulose fibers having a specific aspect ratio and average fiber length are blended with a polyacetal resin, Patent Literature 4 describes a resin composition comprising modified pulp and a thermoplastic resin, and Patent Literature 5 describes a cellulose nanofiber resin composition comprising cellulose nanofibers, a surface treatment agent having an HLB value in a specific range, and a thermoplastic resin which may be a polyacetal resin.

### [CITATION LIST]

### [PATENT LITERATURE]

[PTL 1] WO 2015/147271
[PTL 2] WO 2010/119810
[PTL 3] WO 2012/049926
[PTL 4] WO 2016/148233
[PTL 5] WO 2019/208313

### SUMMARY

### [TECHNICAL PROBLEM]

In compositions containing cellulose as a reinforcing material, as described in Patent Literature 2 to 4, though the rigidity improvement effect can be obtained at room temperature, there are problems in that the rigidity improvement effect at high temperatures is poor mainly due to the large size of the cellulose itself, and under load, cracks occur mainly due to the large-sized cellulose, whereby sufficient toughness cannot be obtained. According to the technology described in Patent Literature 5, by using a surface treatment agent that may have a hydrophilic segment and a hydrophobic segment, it is believed that the dispersibility of the cellulose nanofibers in the thermoplastic resin is improved and suitable rigidity of the resin composition can be exhibited. However, even with this technology, there is still room for improvement from the viewpoint of suppressing a decrease in rigidity under high temperature conditions and a decrease in toughness (in particular, brittle fracture) under load of the polyacetal resin composition.

An aspect of the present invention aims to solve the above problems, and an object thereof is to provide a polyacetal resin composition which achieves a highly dispersed state of cellulose in the polyacetal resin and which has a high degree of both rigidity under high temperature conditions (also referred to as high-temperature rigidity in the present disclosure) and toughness under load, and a production method therefor.

### [SOLUTION TO PROBLEM]

The present disclosure includes the following items.
[1] A polyacetal resin composition, comprising;
   (a) 100 parts by mass of a polyacetal resin,
   (b) 1 to 150 parts by mass of fine cellulose fibers having a fiber diameter of 2 to 1000 nm, and
   (c) 0.1 to 100 parts by mass of polyethylene glycol, wherein
   an ethylene ratio R (%), which is a ratio of a number of oxyethylene units to a total number of oxymethylene units and oxyethylene units of the (a) polyacetal resin, and a number of oxyethylene repeating units n of the (c) polyethylene glycol satisfy the relationship of the following formula: $\left(R+0.5\right) / 0.015 \leq n \leq \left(R+10\right) / 0.015 .$
[2] The polyacetal resin composition according to Item 1, wherein the ethylene ratio R is 0.3% to 1.8%.
[3] The polyacetal resin composition according to Item 1 or 2, wherein the (b) fine cellulose fibers are hydrophobized fine cellulose fibers.
[4] The polyacetal resin composition according to Item 3, wherein an average degree of substitution (DS) of the hydrophobized fine cellulose fibers is 0.5 to 1.5.
[5] The polyacetal resin composition according to any one of Items 1 to 4, wherein the number of oxyethylene repeating units of the (c) polyethylene glycol is 80 to 700.
[6] The polyacetal resin composition according to any one of Items 1 to 5, having a storage modulus at 120°C of 1000 MPa or more.
[7] The polyacetal resin composition according to any one of Items 1 to 6, having a component composition in which a ratio of the storage modulus at 120°C to a storage modulus at 23°C when formulating the fine cellulose fibers at 10% by mass is 0.4 or more.
[8] A method of producing a polyacetal resin composition, comprising melt-kneading:
   (a) 100 parts by mass of a polyacetal resin,
   (b) 1 to 150 parts by mass of fine cellulose fibers having a fiber diameter of 2 to 1000 nm,
   (c) 0.1 to 100 parts by mass of polyethylene glycol,
   (d) 0.01 to 3 parts by mass of a hindered phenolic antioxidant, and
   (e) 0.01 to 3 parts by mass of at least one nitrogen-containing compound selected from the group consisting of aminotriazine compounds, guanamine compounds, hydrazide compounds, and polyamides, wherein
   an ethylene ratio R (%), which is a ratio of a number of oxyethylene units to a total number of oxymethylene units and oxyethylene units of the (a) polyacetal resin, and a number of oxyethylene repeating units n of the (c) polyethylene glycol satisfy the relationship of the following formula: $\left(R+0.5\right) / 0.015 \leq n \leq \left(R+10\right) / 0.015 .$
[9] A method of producing a molded product, comprising a molding step of molding a molding component, which is the polyacetal resin composition according to any one of Items 1 to 7.
[10]The method according to Item 9, wherein the molding component comprises a recycled material, which is a melt-processed product of the molded product.
[11] The method according to Item 10, wherein the molded product is composed of a plurality of members having the same or different compositions,
   in the molding step, the molding component is molded to generate each of the plurality of members, and
   the polyacetal resin composition for generating one or more of the plurality of members comprises a recycled material, which is a melt-processed product of one or more of the plurality of members.
[12] The method according to Item 10 or 11, wherein a content of the recycled material in the molding component is 5% by mass to 100% by mass.
[13] An article, comprising a first member and a second member which are configured so as to be slidable relative to each other, wherein
   the first member is composed of a first resin composition,
   the second member is composed of a second resin composition,
   each of the first resin composition and the second resin composition comprises:
      (a) 100 parts by mass of a polyacetal resin,
      (b) 1 to 150 parts by mass of fine cellulose fibers having a fiber diameter of 2 to 1000 nm, and
      (c) 0.1 to 100 parts by mass of polyethylene glycol, and
   a ratio (A2/A1) of a content ratio (A2) of the fine cellulose fibers in the second resin composition to a content ratio (A1) of the fine cellulose fibers in the first resin composition is 0.5 or more and 1 or less.
[14] The article according to Item 13, wherein the ratio (A2/A1) of the content ratio (A2) of the fine cellulose fibers in the second resin composition to the content ratio (A1) of the fine cellulose fibers in the first resin composition is 1.
[15] The article according to Item 14, wherein the first resin composition and the second resin composition have the same composition.
[16] The article according to any one of Items 13 to 15, wherein an ethylene ratio R (%), which is a ratio of a number of oxyethylene units to a total number of oxymethylene units and oxyethylene units of the (a) polyacetal resin, and a number of oxyethylene repeating units n of the (c) polyethylene glycol satisfy the relationship of the following formula:$(R+0 .5) / 0 .015 \leq n \leq (R+10) / 0 .015 .$
[17] The article according to any of the Items 13 to 16, wherein the first member and the second member are gears, and the article is a gear system.
[18] The article according to any one of Items 13 to 16, wherein the first member and the second member are bearings, and the article is a damper.
[19] The article according to any one of Items 13 to 18 above, wherein the first member and the second member are configured to slide directly relative to each other.
[20] A method of producing the article according to any one of Items 13 to 19, the method comprising:
   a step of molding a first resin composition, which is a molten mixture of a first mixed component comprising a polyacetal resin, fine cellulose fibers, and polyethylene glycol, to obtain the first member, and
   a step of molding a second resin composition, which is a molten mixture of a second mixed component comprising a polyacetal resin, fine cellulose fibers, and polyethylene glycol, to obtain the second member, wherein
   the first mixed component and/or the second mixed component comprise a recycled material, which is a melt-processed product of the first member and/or the second member.
[21] A method of producing a molded product, the method comprising:
   a step of molding a resin composition, which is a molten mixture of a mixed component comprising a polyacetal resin, fine cellulose fibers, and polyethylene glycol, to obtain a molded product, wherein
   the mixed component comprises a recycled material, which is a melt-processed product of the first member and/or the second member of the article according to any one of Items 13 to 19.
[22] The method according to Item 21, wherein the recycled material is a melt-processed product of the first member and the second member, and
   the first resin composition and the second resin composition have the same composition.
[23] The method according to Item 21 or 22, wherein the mixed component has the same composition as the first resin composition and/or the second resin composition.
[24] A molded product obtained by molding the polyacetal resin composition according to any of Items 1 to 7.
[25] The molded product according to Item 24, which is a profile extrusion molded product.
[26] A method of producing a profile extrusion molded product, comprising:
   a step of profile-extruding the polyacetal resin composition according to any of Items 1 to 7.
[27] A printing material for 3D printing, which is composed of the polyacetal resin composition according to any one of Items 1 to 7.
[28] The printing material for 3D printing according to Item 27, which is in a filament or powder form.
[29] A shaped object produced by shaping the polyacetal resin composition according to any one of Items 1 to 7 or the printing material for 3D printing according to the Item 27 or 28 using a 3D printer.
[30] A method of producing a shaped object, the method comprising:
   a step of shaping the polyacetal resin composition according to any of Items 1 to 7 or the printing material for 3D printing according to Item 27 or 28 using a 3D printer.
[31] A cellulose fiber-containing powder for a polyacetal resin composition, the cellulose fiber-containing powder comprising:
   (b) fine cellulose fibers having a fiber diameter of 2 to 1000 nm, and
   (c) polyethylene glycol, wherein
   the (c) polyethylene glycol is polyethylene glycol in which an ethylene ratio R (%), which is a ratio of a number of oxyethylene units to a total number of oxymethylene units and oxyethylene units of a polyacetal resin comprised in the polyacetal resin composition, and a number of oxyethylene repeating units n of the (c) polyethylene glycol satisfy the relationship of the following formula: $\left(R+0.5\right) / 0.015 \leq n \leq \left(R+10\right) / 0.015 .$
[32] A method of producing a cellulose fiber-containing powder for a polyacetal resin composition, wherein
   the cellulose fiber-containing powder comprises:
   (b) fine cellulose fibers having a fiber diameter of 2 to 1000 nm, and
   (c) polyethylene glycol, wherein
   the method comprises a mixing step of mixing the (b) fine cellulose fibers and the (c) polyethylene glycol to obtain a cellulose fiber-containing powder, and
   the (c) polyethylene glycol is selected such that an ethylene ratio R (%), which is a ratio of a number of oxyethylene units to a total number of oxymethylene units and oxyethylene units of a polyacetal resin comprised in the polyacetal resin composition, and a number of oxyethylene repeating units n of the (c) polyethylene glycol satisfy the relationship of the following formula: $\left(R+0.5\right) / 0.015 \leq n \leq \left(R+10\right) / 0.015 .$
[33] A method of producing a polyacetal resin composition, the method comprising:
   a powder preparation step for obtaining a cellulose fiber-containing powder comprising:
      (b) fine cellulose fibers with a fiber diameter of 2 to 1000 nm, and
      (c) polyethylene glycol, and
   a resin composition preparation step of mixing the cellulose fiber-containing powder and (a) a polyacetal resin to obtain a polyacetal resin composition, wherein
   the (a) polyacetal resin is selected such that an ethylene ratio R (%), which is a ratio of a number of oxyethylene units to a total number of oxymethylene units and oxyethylene units of the (a) polyacetal resin, and a number of oxyethylene repeating units n of the (c) polyethylene glycol satisfy the relationship of the following formula: $\left(R+0.5\right) / 0.015 \leq n \leq \left(R+10\right) / 0.015 .$

### [ADVANTAGEOUS EFFECTS OF INVENTION]

According to an aspect of the present disclosure, there can be provided a polyacetal resin composition which achieves a highly dispersed state of cellulose in the polyacetal resin and which achieves both high-temperature rigidity and toughness under load, and a production method therefor.

### BRIEF DESCRIPTION OF DRAWINGS

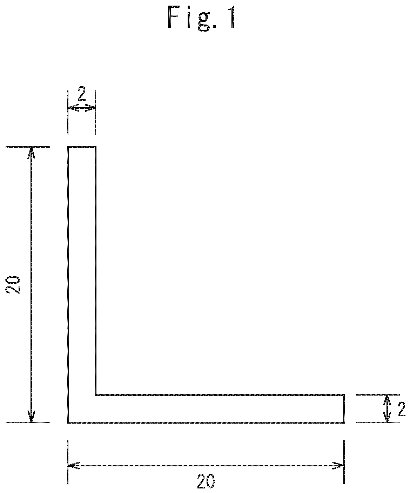

FIG. 1 is a view showing the cross-sectional shape of the die of the single-screw extruder used in Examples 28 to 30.

### DESCRIPTION OF EMBODIMENTS

Exemplary embodiments (also referred to as "the present embodiment" in the present disclosure) of the present invention will be described below, but the present invention is not limited to these embodiments.

### <<Polyacetal Resin Composition>>

The polyacetal resin composition of the present embodiment comprises (a) a polyacetal resin, (b) fine cellulose fibers, and (c) polyethylene glycol. In an aspect, the polyacetal resin composition comprises (d) a hindered phenolic antioxidant. In an aspect, the polyacetal resin composition comprises (e) a nitrogen-containing compound. In an aspect, the fiber diameter of the (b) fine cellulose fibers is 2 to 1000 nm (and in an aspect, 10 to 1000 nm). In an aspect, the (e) nitrogen-containing compound is at least one selected from the group consisting of aminotriazine compounds, guanamine compounds, hydrazide compounds, and polyamides.

For example, according to the technology described in Patent Literature 5 described above, the dispersibility of the fine cellulose fibers in the polyacetal resin can be improved to some extent by using a surface treatment agent, whereby the polyacetal resin composition can be considered to have suitable rigidity at room temperature. However, as a result of investigation by the present inventors, it has been discovered that in order to suppress a decrease in rigidity under high temperature conditions and ensure suitable toughness even under load in the polyacetal resin composition, an improvement to a more appropriate surface treatment agent is necessary. The present inventors have conducted further investigation, and have discovered that in order to highly disperse fine cellulose fibers in a thermoplastic resin, and in particular, a polyacetal resin, a surface treatment agent without a hydrophobic segment is advantageous, and in particular, the use of polyethylene glycol is advantageous from the viewpoint of preventing both a decrease in rigidity under high temperature conditions and the prevention of brittle fracture under load.

A preferable embodiment of the polyacetal resin composition of the present embodiment will be specifically described below.

### <(a) Polyacetal Resin>

The (a) polyacetal resin is a polymer compound the main constituent unit of which is an oxymethylene group (-OCH₂-), and typical examples thereof include polyacetal homopolymers consisting essentially of repeating oxymethylene units, and polyacetal copolymers containing oxymethylene units and other monomer units. The (a) polyacetal resin also includes copolymers into which branched and/or crosslinked structures have been introduced by copolymerizing branch-forming components and/or crosslinking-forming components, and block or graft copolymers having a polymer portion consisting of repeating oxymethylene groups and another polymer portion.

In general, examples of polyacetal homopolymers include those produced by polymerization of one or more monomers selected from anhydrous formaldehyde and cyclic formaldehyde oligomers such as trioxane (cyclic trimer of formaldehyde) and tetraoxane (cyclic tetramer of formaldehyde). They are conventionally stabilized against thermal decomposition by esterifying the polymerization terminals.

General examples of polyacetal copolymers include those produced by copolymerization of formaldehyde and/or a cyclic oligomer of formaldehyde represented by the general formula (CH₂O)n [where n represents an integer of 3 or more] (for example, trioxane described above) and a comonomer such as a cyclic ether and/or a cyclic formal (for example, a cyclic formal of glycols or diglycols such as ethylene oxide, propylene oxide, epichlorohydrin, 1,3-dioxolane, and 1,4-butanediol formals). They are usually stabilized against thermal decomposition by removing unstable terminal moieties via hydrolysis.

Examples of polyacetal copolymers include branched polyacetal copolymers obtained by copolymerizing a formaldehyde monomer and/or a cyclic oligomer and a monofunctional glycidyl ether; and polyacetal copolymers having a crosslinked structure obtained by copolymerizing a formaldehyde monomer and/or a cyclic oligomer with a polyfunctional glycidyl ether.

Examples of polyacetal resins include polyacetal homopolymers containing a block component obtained by polymerizing a formaldehyde monomer and/or a cyclic oligomer in the presence of a compound having a functional group such as a hydroxyl group at both terminals or one terminal, for example, polyalkylene glycol; and polyacetal copolymers containing a block component obtained by copolymerizing a formaldehyde monomer and/or a cyclic oligomer with a cyclic ether and/or a cyclic formal in the presence of a compound having a functional group such as a hydroxyl group at both terminals or one terminal, for example, hydrogenated polybutadiene glycol.

The (a) polyacetal resin of the present embodiment is, in an aspect, a polyacetal copolymer described above from the viewpoint of satisfactorily exerting the effect of the (c) polyethylene glycol and improving the dispersibility of the (b) fine cellulose fibers, and in an aspect, is a polyacetal copolymer the structural units of which include oxymethylene units (-OCH₂-) and oxyethylene units (-OC₂H₅-) (hereinafter also referred to as oxyethylene unit-containing copolymers). The oxyethylene unit-containing copolymer can be produced by copolymerizing formaldehyde and/or a cyclic oligomer of formaldehyde represented by the general formula (CH ₂O)n [where n is an integer of 3 or more] (for example, the trioxane described above), ethylene glycol or a cyclic formal thereof, and optionally other components. Since the oxyethylene unit-containing copolymer has particularly suitable affinity with the (c) polyethylene glycol of the present embodiment due to the contribution of the oxyethylene unit, it is particularly advantageous in that it improves the affinity between the (a) polyacetal resin and the (b) fine cellulose fibers, whereby the (b) fine cellulose fibers can be highly dispersed in the (a) polyacetal resin.

The ratio of the total number of oxymethylene units and oxyethylene units to the total number of repeating units of the (a) polyacetal resin is, in an aspect, 90% or more or 95% or more, and is typically 100%.

In the oxyethylene unit-containing copolymer, regarding the ratio of oxyethylene units to the total number of oxymethylene units represented by the general formula (CH₂O) and oxyethylene units represented by the general formula (CH₂CH₂O) (also referred to as the ethylene ratio in the present disclosure), from the viewpoint of suitably obtaining the effect of the (c) polyethylene glycol and from the viewpoint of dimensional stability of the resin composition, the lower limit is preferably 0.3% or 0.4%, and from the viewpoint of the heat resistance and mechanical strength of the resin composition, the upper limit is preferably 1.8%, 1.7%, 1.6%, or 1.5%.

The (a) polyacetal resin is preferably a copolymer of 99.9 to 90% by mass of trioxane and 0.1 to 10% by mass of a monofunctional cyclic ether. In the copolymer, the total of the alkoxy terminal groups and the hydroxyalkoxy terminal groups having at least two carbon atoms is preferably 70 to 99 mol% of the total terminal groups. The number of terminal groups can be measured using a known method (specifically, infrared absorption spectroscopy or nuclear magnetic resonance, and more specifically, the methods described in Japanese Unexamined Patent Publication (Kokai) No. 5-98028 and Japanese Unexamined Patent Publication (Kokai) No. 2001-11143).

Regarding the melt mass flow rate (MFR) of the (a) polyacetal resin measured under conditions of 190° C and a load of 2.16 kgf (21.2 N) in accordance with ASTM-D1238 (ISO1133), the lower limit is preferably 2 g/10 min, 4 g/10 min, or 7 g/10 min, and the upper limit is preferably 25 g/10 min, 20 g/10 min, or 18 g/10 min. By setting the MFR within the above range, the reinforcing effect of the fine cellulose fibers can be maximized while ensuring mold fluidity.

### <(b) Fine Cellulose Fibers>

The (b) fine cellulose fibers may be obtained from various cellulose fiber raw materials selected from natural cellulose and regenerated cellulose. In an aspect, the cellulose fiber raw material may be chemically modified in advance with a modifying agent exemplified in the section [Modifying Agent], which is described later.

The fine cellulose fibers can be obtained by a mechanical fine reduction of cellulose fiber raw materials in a dry or wet manner. This fine reduction treatment can be carried out using a single device once or more, or a plurality of devices can be used once or more.

The device used for the fine reduction is not particularly limited, examples thereof include a high-speed rotary type, colloid mill type, high-pressure type, roll mill type, or ultrasonic type device, and a high-pressure or ultra-high-pressure homogenizer, refiner, beater, PFI mill, kneader, disperser, high-speed defibrator, grinder (stone mill pulverizer), ball mill, vibration mill, bead mill, conical refiner, disc type refiner, one-shaft, two-shaft or multi-shaft kneading machine/extruder, homomixer under high-speed rotation which causes metal or cutting implements to interact with pulp fibers around a rotating shaft, or devices which use friction between pulp fibers can be used.

The fiber diameter of the fine cellulose fibers is, in an aspect, 2 nm or more, or 4 nm or more, or 5 nm or more, or 10 nm or more, or 20 nm or more, or 30 nm or more, or 40 nm or more, or 50 nm or more from the viewpoint of suitably maintaining the crystallinity of the cellulose. Conversely, the upper limit is, in an aspect, 1000 nm or less, or 800 nm or less, or 500 nm or less, or 300 nm or less, or 200 nm or less, or 100 nm or less from the viewpoint of providing a suitable effect as a filler.

From the viewpoint of satisfactorily improving the mechanical properties of the resin composition containing the fine cellulose fibers, particularly an injection molded product, with a smaller amount of fine cellulose fibers, the fiber length/fiber diameter (L/D) of the fine cellulose fibers is preferably 50 or more, or 80 or more, or 100 or more, or 120 or more, or 150 or more. The upper limit is not particularly limited, and is preferably 5,000 or less from the viewpoint of handleability.

In the present disclosure, the fiber diameter, fiber length, and LID ratio of fine cellulose fibers are determined by diluting an aqueous dispersion of the fine cellulose fibers with a water-soluble solvent (for example, water, ethanol, tert-butanol, etc.) to 0.001 to 0.1% by mass, dispersing using a high shear homogenizer (for example, trade name "Ultra Turrax T18" manufactured by IKA) under the processing conditions: 25,000 rpm × 5 minutes, casting on a hydrophilic substrate (for example, mica), using the air-dried sample as a measurement sample, and measuring with a high-resolution scanning electron microscope (SEM) or atomic force microscope (AFM). Specifically, the length (L) and diameter (D) of 100 randomly selected fibrous substances are measured in an observation field where the magnification is adjusted so that at least 100 fibrous substances are observed, and the ratio (L/D) is calculated. The number average value of the length (L), the number average value of the diameter (D), and the number average value of the ratio (L/D) of the fine cellulose fibers are calculated.

Known crystalline polymorphs of cellulose include type I, type II, type III, and type IV, of which type I and type II are particularly widely used, and type III and type IV are obtained on a laboratory scale but are not widely used on an industrial scale. When the crystalline polymorph of the cellulose fine fibers is type I or type II, the mechanical properties (strength, dimensional stability) of the fibers are high, and when the cellulose fine fibers are dispersed in the resin, the strength and dimensional stability of the resin composition are high, which is preferable.

From the viewpoint of obtaining suitable mechanical properties, the crystallinity of the fine cellulose fibers of the present embodiment is preferably 55% or more, or 60% or more, or 65% or more, or 70% or more, or 75% or more, or 80% or more. Since a higher crystallinity of the fine cellulose fibers tends to be more preferable, the upper limit is not particularly limited, and from the viewpoint of production, the upper limit is preferably 99%.

When the fine cellulose fibers are cellulose type I crystals (derived from natural cellulose), the degree of crystallinity is determined by the Segal method from a diffraction pattern (2θ/deg. is 10 to 30) obtained by measuring a sample by wide-angle X-ray diffraction, according to the following formula: $Degree of crystallinity \left(%\right) = \left[{I}_{\left(200\right)}-{I}_{\left(amorphous\right)}\right] / {I}_{\left(200\right)} \times 100$
I₍₂₀₀₎: diffraction peak intensity due to the 200 plane (2θ = 22.5°) in cellulose I crystals
I₍ₐₘₒᵣₚₕₒᵤₛ₎: halo peak intensity due to the amorphous phase in cellulose I crystals, which is the peak intensity at an angle 4.5° lower than the diffraction angle of the 200 plane (2θ = 18.0°)

When the fine cellulose fibers are cellulose type II crystals (derived from regenerated cellulose), the degree of crystallinity can be calculated from the absolute peak intensity h0 at 2θ = 12.6° attributed to the (110) plane peak of the cellulose type II crystals and the peak intensity h1 from the baseline at this plane spacing in wide-angle X-ray diffraction using the following formula: $Degree of crystallinity \left(%\right) = \left(h0-h1\right) / h 0 \times 100$

The degree of polymerization (DP) of the fine cellulose fibers is preferably 100 or more, and more preferably 150 or more, from the viewpoint of suitable tensile strength at break and elastic modulus, and is preferably 12000 or less, and more preferably 8000 or less from the viewpoint of ease of availability. The degree of polymerization is determined as the degree of polymerization DP by determining the intrinsic viscosity (JIS P8215:1998) of a dilute cellulose solution using a copper ethylenediamine solution, and then utilizing the relationship between the intrinsic viscosity of cellulose and the degree of polymerization DP as represented by following formula: $Intrinsic viscosity \left[η\right] = K \times DPa$ where K and a are constants determined depending on the type of polymer. In the case of cellulose, K is 5.7 × 10⁻³ and a is 1.

The weight average molecular weight (Mw) of the fine cellulose fibers is preferably 100,000 or more, and more preferably 200,000 or more. The ratio (Mw/Mn) of the weight average molecular weight to the number average molecular weight (Mn) of the fine cellulose fibers is preferably 6 or less, and more preferably 5.4 or less. The greater the weight average molecular weight, the smaller the number of terminal groups of the cellulose molecule. Since the ratio (Mw/Mn) of the weight average molecular weight to the number average molecular weight represents the width of the molecular weight distribution, the smaller the Mw/Mn, the fewer the number of terminals of the cellulose molecule. Since the terminals of the cellulose molecules are the starting points of thermal decomposition, when the cellulose molecules of the fine cellulose fibers not only have a large weight average molecular weight but also have a narrow width of the molecular weight distribution, the fine cellulose fibers have particularly high heat resistance. From the viewpoint of the availability of the cellulose raw material, the weight average molecular weight (Mw) of the cellulose fibers may be, for example, 600,000 or less or 500,000 or less. The ratio (Mw/Mn) of the weight average molecular weight to the number average molecular weight (Mn) may be, for example, 1.5 or more or 2 or more from the viewpoint of ease of production of the cellulose fibers. Mw can be controlled to the above range by selecting a cellulose raw material having an Mw according to the purpose, performing physical and/or chemical treatment on the cellulose raw material appropriately in a moderate range, etc. Mw/Mn can also be controlled to the above range by selecting a cellulose raw material having an Mw/Mn according to the purpose, performing physical and/or chemical treatment on the cellulose raw material appropriately in a moderate range, etc. In both the control of Mw and the control of Mw/Mn, examples of the physical treatment include dry or wet grinding using a microfluidizer, ball mill, disk mill, etc., physical treatment in which mechanical forces such as impact, shear, and friction are applied using a crusher, homomixer, high-pressure homogenizer, ultrasonic device, etc., and examples of the chemical treatment include pulping, bleaching, acid treatment, and cellulose regeneration.

The weight average molecular weight and number average molecular weight of the fine cellulose fibers are values determined by dissolving the fine cellulose fibers in N,N-dimethylacetamide containing lithium chloride, and then performing gel permeation chromatography using N,N-dimethylacetamide as a solvent.

### [Modifying Agent]

The fine cellulose fibers may be chemically modified fine cellulose fibers that have been chemically modified with a modifying agent. As the modifying agent, compounds which react with the hydroxyl groups of cellulose can be used, such as inorganic esterifying agents (nitrate ester, sulfate ester, phosphate ester, silicate ester, borate ester, etc.), organic esterifying agents (acetylating agents, propionylating agents, etc.), etherification agents (methyl ether, hydroxyethyl ether, hydroxypropyl ether, hydroxybutyl ether, carboxymethyl ether, cyanoethyl ether, etc.), silylating agents, and TEMPO oxidation catalysts (which oxidize the primary hydroxyl groups of the cellulose). In a preferable aspect, the chemical modification is esterification, specifically esterification (acylation) using an organic esterifying agent, and particularly preferably acetylation. Preferable organic esterifying agents are acid halides, acid anhydrides, vinyl carboxylates, and carboxylic acids. Preferable chemical modification is hydrophobization of the fine cellulose fibers, particularly hydrophobization by subjecting the surface of the fine cellulose fibers to a hydrophobic chemical treatment. A preferable example of hydrophobization is acetylation.

The degree of modification of the chemically modified fine cellulose fibers (more specifically, the degree of hydrophobization in hydrophobization such as acylation) is expressed as the average degree of substitution of the hydroxyl groups (the average number of substituted hydroxyl groups per glucose, which is the basic structural unit of cellulose, also referred to as DS). In an aspect, from the viewpoint of maintaining the affinity between the polyacetal resin and the fine cellulose fibers and thermal stability during processing, DS is preferably 0.1 or more, or 0.2 or more, or 0.3 or more, or 0.5 or more, or 0.6 or more, or 0.7 or more, or 0.75 or more, and from the viewpoint of high affinity between the polyacetal resin and the fine cellulose fibers and high temperature rigidity of the resin composition, DS is preferably 1.5 or less, or 1.4 or less, or 1.35 or less, or 1.2 or less, or 1.0 or less.

When the chemical modification is acylation, the degree of acyl substitution (DS) of the esterified fine cellulose fibers can be calculated from the reflectance infrared absorption spectrum of the esterified fine cellulose fibers based on the peak intensity ratio of the peak derived from the acyl group to the peak derived from the cellulose backbone. The peak of the absorption band of C=O based on the acyl group appears at 1730 cm⁻¹, and the peak of the absorption band of C-O based on the cellulose backbone chain appears at 1030 cm⁻¹. The DS of the esterified fine cellulose fibers can be determined by creating a correlation graph between DS obtained from solid-state NMR measurement of the esterified fine cellulose fibers, which is described later, and the modification rate (IR index) defined as the ratio of the peak intensity of the absorption band of C=O based on the acyl group to the peak intensity of the absorption band of cellulose backbone chain C-O, and using the calibration curve obtained from this correlation graph. $Degree of substitution DS = 4.13 \times IR index$

The IR index is represented by the following formula. $IR index = H 1730 / H 1030$ where H1730 and H1030 are the absorbances at 1730 cm⁻¹ and 1030 cm⁻¹ (absorption bands of C-O stretching vibration of the cellulose backbone chain), respectively, provided that the line connecting 1900 cm⁻¹ and 1500 cm⁻¹ and the line connecting between 800 cm⁻¹ and 1500 cm⁻¹ are taken as baselines, and the absorbances are calculated with the absorbance set to 0 at these baselines.

As the method for calculating DS of the esterified fine cellulose fibers by solid-state NMR, ¹³C solid-state NMR measurement is performed on freeze-pulverized esterified fine cellulose fibers, and can be determined using the following formula from the area intensity (Inf) of the signal attributed to one carbon atom derived from the modifying group relative to the total area intensity (Inp) of the signal attributed to C1-C6 carbons derived from the pyranose ring of the cellulose appearing in the range of 50 ppm to 110 ppm: $DS = \left(Inf\right) \times 6 / \left(Inp\right)$

For example, when the modifying group is an acetyl group, the signal at 23 ppm assigned to - CH₃ may be used.

The conditions used in the ¹³C solid-state NMR measurement are, for example, as described below.
Device: Bruker Biospin Avance 500WB
Frequency: 125.77 MHz
Measurement method: DD/MAS method
Waiting time: 75 seconds
NMR sample tube: 4 mm diameter
Number of accumulations: 640 (approximately 14 hours)
MAS: 14,500 Hz
Chemical shift reference: glycine (external reference: 176.03 ppm)

The amount of the (b) fine cellulose fibers in the polyacetal resin composition is 1 to 150 parts by mass relative to 100 parts by mass of the (a) polyacetal resin in an aspect. The amount is preferably 2 parts by mass or more, 4 parts by mass or more, or 5 parts by mass or more from the viewpoint of maintaining high high-temperature rigidity of the resin composition, and from the viewpoint of improving the toughness of the resin composition under load (for example, under tension), the amount is preferably 100 parts by mass or less, or 80 parts by mass or less, or 50 parts by mass or less, or 40 parts by mass or less, or 20 parts by mass or less.

### <(c) Polyethylene Glycol>

The polyacetal resin composition of the present embodiment comprises (c) polyethylene glycol. The (c) polyethylene glycol is a substance obtained by polymerizing ethylene oxide, and ensures suitable affinity of the fine cellulose fibers with the polyacetal resin, and in particular, the polyacetal resin having oxyethylene units.

The number of oxyethylene repeating units n of the (c) polyethylene glycol is preferably 80 or more, or 90 or more, or 100 or more, or 110 or more, or 120 or more, or 130 or more from the viewpoint of increasing the rigidity of the polyacetal resin composition, and in particular, the high-temperature rigidity thereof, and from the viewpoint of processability, it is preferably 700 or less, or 650 or less, or 600 or less, or 550 or less, or 500 or less, or 450 or less, or 400 or less, or 350 or less.

In an aspect, the ethylene ratio R (%), which is the ratio of the number of oxyethylene units to the total number of oxymethylene units and oxyethylene units of the (a) polyacetal resin, and the number of oxyethylene repeating units n of the (c) polyethylene glycol satisfy the following relationship: $\left(R+0.5\right) / 0.015 \leq n \leq \left(R+10\right) / 0.015$

When the relationship of this formula is satisfied, due to the contribution of the high affinity between the (a) polyacetal resin and the (c) polyethylene glycol, the (c) polyethylene glycol improves the affinity between the (a) polyacetal resin and the (b) fine cellulose fibers, and thus, high dispersion of the (b) fine cellulose fibers in the (a) polyacetal resin is achieved, and both high high-temperature rigidity and high toughness under load of the polyacetal resin composition are achieved. n described above is more preferably (R+0.6) / 0.015 or more, or (R+0.7) / 0.015 or more and is more preferably (R+9) / 0.015 or less, or (R+8) / 0.015 or less, or (R+7) / 0.015 or less, or (R+6) / 0.015 or less, or (R+5) / 0.015 or less.

In order to develop suitable rigidity of the polyacetal resin composition, it is desirable that the fine cellulose fibers be well dispersed in the resin. The viscosity of the mixed system during the production of the polyacetal resin composition is advantageously moderately high from the viewpoint of applying a moderate shear force to the fine cellulose fibers for dispersing the fine cellulose fibers well in the resin. Conversely, from the viewpoint of suppressing decomposition of the polymer in the resin composition due to the shear force, it is advantageous that the viscosity not be excessively high. In the (a) polyacetal resin, the melting point tends to be lower (and thus, the melt viscosity at a certain temperature tends to be lower) as the ethylene ratio R increases. In the (c) polyethylene glycol, the viscosity tends to be higher as the number of oxyethylene repeating units n increases. Thus, when the ethylene ratio R of the (a) polyacetal resin is relatively small (i.e., the melting point is relatively high), it is preferable that the number of oxyethylene repeating units n of the (c) polyethylene glycol also be relatively small from the viewpoint of suppressing decomposition of the polymer due to the increase in viscosity. Conversely, when the ethylene ratio R of the (a) polyacetal resin is relatively large (i.e., the melting point is relatively low), it is preferable that the number of oxyethylene repeating units n of the (c) polyethylene glycol also be relatively large from the viewpoint of applying a shear force to the fine cellulose fibers. Thus, it is advantageous that the ethylene ratio R and the number of oxyethylene repeating units n satisfy the above formula from the viewpoint that the viscosity of the mixed system during the production of the polyacetal resin composition can be easily controlled within the preferable range.

In an aspect, the amount of the (c) polyethylene glycol in the polyacetal resin composition is 0.1 to 100 parts by mass relative to 100 parts by mass of the (a) polyacetal resin. The amount is preferably 1 part by mass or more, or 2 parts by mass or more, or 3 parts by mass or more, or 4 parts by mass or more, or 5 parts by mass or more from the viewpoint of maintaining high high-temperature rigidity of the polyacetal resin composition, and from the viewpoint of improving the toughness under load (for example, under tension), it is preferably 80 parts by mass or less, or 50 parts by mass or less, or 20 parts by mass or less, or 10 parts by mass or less.

### <(d) Hindered Phenolic Antioxidant>

In an aspect, the polyacetal resin composition of the present embodiment comprises (d) a hindered phenolic antioxidant. The (d) hindered phenolic antioxidant contributes to thermal stability of the (a) polyacetal resin.

Examples of hindered phenolic antioxidants include n-octadecyl-3-(3',5'-di-t-butyl-4'-hydroxyphenyl)-propionate, n-octadecyl-3-(3' -methyl-5' -t-butyl-4' -hydro xyphenyl)-propionate, n-tetradecyl-3-(3',5'-di-t-butyl-4'-hydroxyphenyl)-propionate, 1,6-hexanediol-bis-[3-(3,5-di-t-butyl-4-hydroxyphenyl)-propionate], 1,4-butanediol-bis-[3-(3,5-di-t-butyl-4-hydroxyphenyl)-propionate], triethylene glycol-bis-[3-(3-t-butyl-5-methyl-4-hydroxyphenyl)-propionate], pentaerythritol tetrakis [methylene-3-(3 ', 5' -di-t-butyl-4' -hydroxyphenyl)propionate]methane, 1,2-bis[3-(4-hydroxy-3,5-di-t-butylphenyl)propionyl]hydrazine, N,N'-hexamethylenebis[3-(3,5-di-t-butyl-4-hydroxyphenyl)propanamidel, 1,3,5-tris[[3,5-bis(1,1-dimethylethyl)-4-hydroxyphenyl]methyl]-1,3,5-triazine-2,4,6(1H,3H,SH)-trion, and 4-[[4,6-bis(octylthio)-1,3,5-triazin-2-yl]amino]-2,6-di-t-butylphenol.

Triethylene glycol-bis-[3-(3-t-butyl-5-methyl-4-hydroxyphenyl)-propionate], pentaerythritol tetrakis [methylene-3-(3 \, 5' -di-t-butyl-4' -hydroxyphenyl)propionate] methane, 1,2-bis[3-(4-hydroxy-3,5-di-t-butylphenyl)propionyl]hydrazine, or N,N'-hexamethylenebis[3-(3,5-di-t-butyl-4-hydroxyphenyl)propanamide] is preferable, and among these, a nitrogen-containing hindered phenolic antioxidant is particularly preferable from the viewpoint of improving the thermal stability of the (a) polyacetal resin.

From the above viewpoint, it is preferable that the nitrogen-containing hindered phenolic antioxidant contain a hydrazine structure. Based on these, from the viewpoint of improving mold depositability during long-term continuous molding, improving the appearance of the molded product, and further reducing changes in color difference after retention in the molding machine, the nitrogen-containing hindered phenolic antioxidant is more preferably 1,2-bis[3-(4-hydroxy-3,5-di-t-butylphenyl)propionyl]hydrazine.

From the viewpoint of further improving the thermal stability of the polyacetal resin composition, the melting point of the hindered phenolic antioxidant is preferably 50°C or higher, more preferably 150°C or higher, further preferably 200°C or higher, and even further preferably 225°C or higher, and is preferably 300°C or lower, and more preferably 250°C or lower. In the present disclosure, the melting point is a value measured using a differential scanning calorimeter (DSC) at a heating rate of 10°C/min.

The amount of the (d) hindered phenolic antioxidant in the polyacetal resin composition of the present embodiment is preferably 0.01 to 3 parts by mass, more preferably 0.02 to 2 parts by mass, and further preferably 0.03 to 1.5 parts by mass relative to 100 parts by mass of the (a) polyacetal resin. The amount of the (d) hindered phenolic antioxidant being within the above range is advantageous from the viewpoint of obtaining a polyacetal resin composition having excellent moldability.

### (e) Nitrogen-Containing Compound

The polyacetal resin composition of the present embodiment comprises (e) a nitrogen-containing compound in an aspect. The nitrogen-containing compound (e) contributes to maintaining the color tone and thermal stability of the (a) polyacetal resin, suppressing odor during processing, and improving mechanical properties thereof. In an aspect, the (e) nitrogen-containing compound includes aminotriazine compounds, guanamine compounds, urea derivatives, hydrazide compounds, amide compounds (e.g., acrylamide polymers), and polyamides, which can be used alone or in combination of two or more thereof. In a preferable aspect, the (e) nitrogen-containing compound is at least one selected from the group consisting of aminotriazine compounds, guanamine compounds, hydrazide compounds, and polyamides.

Examples of aminotriazine compounds include melamine, 2,4-diamino-sym-triazine, 2,4,6-triamino-sym-triazine, N-butylmelamine, N-phenylmelamine, N,N-diphenylmelamine, N,N-diallylmelamine, benzoguanamine (2,4-diamino-6-phenyl-sym-triazine), acetoguanamine (2,4-diamino-6-methyl-sym-triazine), and 2,4-diamino-6-butyl-sym-triazine.

Examples of guanamine compounds include aliphatic guanamine compounds (monoguanamines, alkylene bisguanamines, etc.), alicyclic guanamine compounds (monoguanamines, etc.), aromatic guanamine compounds [for example, monoguanamines (benzoguanamine and functional group-substituted derivatives thereof, etc.), α- or β-naphthoguanamine and functional group-substituted derivatives thereof, polyguanamines, aralkyl or aralkylene guanamines, etc.], and heteroatom-containing guanamine compounds [for example, acetal group-containing guanamines, tetraoxospiro ring-containing guanamines (CTU-guanamine, CMTU-guanamine, etc.), isocyanuric ring-containing guanamines, imidazole ring-containing guanamines, etc.].

Examples of urea derivatives include N-substituted ureas, urea condensates, ethylene ureas, hydantoin compounds, and ureido compounds.

Examples of N-substituted ureas include methyl urea having a substituent such as an alkyl group, alkylene bis urea, and aryl substituted urea.

Examples of urea condensates include condensates of urea and formaldehyde.

Examples of hydantoin compounds include hydantoin, 5,5-dimethylhydantoin, and 5,5-diphenylhydantoin.

Examples of ureido compounds include allantoin.

The hydrazide compound may be a carboxylic acid mono/dihydrazide compound synthesized by the reaction of a carboxylic acid (containing an aromatic ring and/or an alicyclic ring) with hydrazine, or an alkyl group-substituted mono/dihydrazide compound. The carboxylic acid constituting the carboxylic acid mono/dihydrazide compound may be a monocarboxylic acid, a dicarboxylic acid, etc., which may be saturated or unsaturated. Examples of monocarboxylic acids include formic acid, acetic acid, propionic acid, butyric acid, valeric acid, caproic acid, enanthic acid, caprylic acid, lauric acid, myristic acid, palmitic acid, margaric acid, stearic acid, and behenic acid. Examples of dicarboxylic acids include oxalic acid, malonic acid, succinic acid, glutaric acid, adipic acid, pimelic acid, suberic acid, azelaic acid, sebacic acid, benzoic acid, phthalic acid, isophthalic acid, terephthalic acid, naphthalic acid, salicylic acid, gallic acid, mellitic acid, cinnamic acid, pyruvic acid, lactic acid, malic acid, citric acid, fumaric acid, maleic acid, aconitic acid, amino acids, and nitrocarboxylic acids. Examples of unsaturated carboxylic acids include oleic acid, linoleic acid, linolenic acid, arachidonic acid, docosahexaenoic acid, and eicosapentaenoic acid. Examples of carboxylic acid mono(di)hydrazide compounds synthesized using these carboxylic acids include carbodihydrazine, oxalic acid mono(di)hydrazide, malonic acid mono(di)hydrazide, succinic acid mono(di)hydrazide, glutaric acid mono(di)hydrazide, adipic acid mono(di)hydrazide, sebacic acid mono(di)hydrazide, lauric acid mono(di)hydrazide, malic acid dihydrazide, tartaric acid dihydrazide, propionic acid monohydrazide, lauric acid monohydrazide, stearic acid monohydrazide, phthalic acid dihydrazide, isophthalic acid dihydrazide, terephthalic acid dihydrazide, 2,6-naphthalic acid dihydrazide, p-hydroxybenzoic hydrazine, p-hydroxybenzoic hydrazine, 1,4-cyclohexanedicarboxylic acid dihydrazine, acetohydrazide, acrylohydrazide, maleic acid dihydrazide, fumaric acid dihydrazide, benzohydrazide, nicotinohydrazide, isonicotinohydrazide, isobutylhydrazine, and oleic acid hydrazide. Among these carboxylic acids, dicarboxylic acids such as adipic acid, sebacic acid, and lauric acid are preferable, and adipic acid mono(di)hydrazide, sebacic acid mono(di)hydrazide, and lauric acid mono(di)hydrazide are the most preferable carboxylic acid hydrazide compounds.

Among these carboxylic acid hydrazide compounds, when the content of the monohydrazide compound and the dihydrazide compound is within a specific range, it is possible to suppress the generation of char and modified products that occur during long-term continuous molding, and to suppress mold contamination. The content of the carboxylic acid monohydrazide compound is preferably in the range of 0.0001 to 1.0% by mass relative to the total of the carboxylic acid monohydrazide compound and the carboxylic acid dihydrazide compound (100% by mass). This content is more preferably in the range of 0.0001 to 0.5% by mass, and further preferably in the range of 0.0001 to 0.1% by mass.

The content of the carboxylic acid monohydrazide compound can be adjusted by adding a monohydrazide compound to the carboxylic acid dihydrazide compound, and by adjusting the synthesis reaction conditions when synthesizing the carboxylic acid and hydrazine by reaction. In the method of adjusting the synthesis reaction conditions of the carboxylic acid and hydrazine, a monohydrazide compound is generated as an intermediate during the synthesis reaction. The content of the monohydrazide compound can be adjusted by washing and removing the monohydrazide compound.

Examples of amide compounds include polycarboxylic acid amides such as isophthalic acid diamide, anthranilamide, and polyacrylamide polymers.

The acrylamide polymer is preferably a particulate polymer having 30 to 70 mol% primary amide groups and an average particle size of 0.1 to 10 µm. Among them, a preferable acrylamide polymer is a crosslinked acrylamide polymer having an average particle size of 10 µm or less. More preferable is an acrylamide polymer having an average particle size of 5 µm or less, and most preferable is a crosslinked acrylamide polymer having an average particle size of 3 µm or less.

Polyamides include polyamides derived from diamines and dicarboxylic acids, polyamides obtained by using aminocarboxylic acids, optionally in combination with diamines and/or dicarboxylic acids; and polyamides derived from lactams, optionally in combination with diamines and/or dicarboxylic acids; and further include copolymer polyamides formed from two or more different polyamide-forming components.

The melting point of the polyamide is preferably 240°C or higher, more preferably 245°C or higher, and further preferably 250°C or higher. By using a polyamide having a melting point of 240°C or higher, a polyacetal resin composition having much better mold depositability and color difference change after retention in a mold can be obtained.

Examples of polyamides having a melting point of 240°C or higher include polyamide 66, polyamide 46, polyamide 66/6T, and polyamide 66/6I/6T.

Among these polyamides, polyamide 66, polyamide 66/6T, and polyamide 66/6I/6T are preferable, and polyamide 66 is more preferable.

The (e) nitrogen-containing compound may be used alone or in combination of two or more thereof. From the viewpoint of maintaining color tone and thermal stability, suppressing odor during processing, and mechanical properties, the amount of the (e) nitrogen-containing compound relative to 100 parts by mass of the polyacetal resin (a) in the polyacetal resin composition is preferably 0.001 parts by mass or more, or 0.005 parts by mass or more, or 0.01 parts by mass or more, and from the viewpoint of suppressing mold deposits on the mold in advance, the amount is preferably 3 parts by mass or less, or 2 parts by mass or less, or 1 part by mass or less, or 0.7 parts by mass or less, or 0.5 parts by mass or less, or 0.3 parts by mass or less.

### <Other Additives>

The polyacetal resin composition of the present embodiment may further comprise, in addition to the foregoing, other additives, for example, known additives such as a formic acid scavenger, a weathering stabilizer, a release agent, a lubricant, a conductive agent, a thermoplastic resin, a thermoplastic elastomer, a dye/pigment, a pigment, or an inorganic or organic filler. From the viewpoint of obtaining a resin composition suitable for a sliding part, which will be described later, in an aspect, the polyacetal resin composition may contain a sliding agent component as an additive.

These additives may be used alone or in combination of two or more thereof.

Examples of formic acid scavengers include, but are not limited to, hydroxides, inorganic acid salts, carboxylates, and alkoxides of alkali metals or alkaline earth metals, such as hydroxides of sodium, potassium, magnesium, calcium, and barium; carbonates, phosphates, silicates, borates, and carboxylates of the above metals, and layered double hydroxides.

The carboxylic acid of the carboxylates is preferably a saturated or unsaturated aliphatic carboxylic acid having 10 to 36 carbon atoms, and this carboxylic acid may be substituted with a hydroxyl group. Examples of saturated or unsaturated aliphatic carboxylates include, but are not limited to, calcium dimyristate, calcium dipalmitate, calcium distearate, calcium (myristate-palmitate), calcium (myristate-stearate), calcium (palmitate-stearate), and calcium 12-hydroxystearate, and among these, calcium dipalmitate, calcium distearate, and calcium 12-hydroxydistearate are preferable.

The formic acid scavenger may be used alone or in combination of two or more thereof.

The weathering stabilizer is not limited to the following, and preferable examples thereof include at least one selected from the group consisting of benzotriazole-based compounds, oxalic acid anilide-based compounds, and hindered amine-based light stabilizers.

Examples of benzotriazole-based compounds include, but are not limited to, 2-(2'-hydroxy-5'-methyl-phenyl)benzotriazole, 2-(2'-hydroxy-3,5-di-t-butyl-phenyl)benzotriazole, 2-[2'-hydroxy-3,5-bis(α,α-dimethylbenzyl)phenyl]benzotriazole, 2-(2'-hydroxy-3,5-di-t-amylphenyl]benzotriazole, 2-(2'-hydroxy-3,5-di-isoamyl-phenyl)benzotriazole, 2-[2'-hydroxy-3,5-bis-(α,α-dimethylbenzyl)phenyl]-2H-benzotriazole, and 2-(2'-hydroxy-4'-octoxyphenyl)benzotriazole. Each of these compounds may be used alone or in combination of two or more thereof.

Examples of oxalic acid anilide-based compounds include, but are not limited to, 2-ethoxy-2'-ethyloxalic acid bisanilide, 2-ethoxy-5-t-butyl-2'-ethyloxalic acid bisanilide, and 2-ethoxy-3'-dodecyloxalic acid bisanilide. These compounds may be used alone or in combination of two or more thereof.

Examples of hindered amine light stabilizers include, but are not limited to, 4-acetoxy-2,2,6,6-tetramethylpiperidine, 4-stearoyloxy-2,2,6,6-tetramethylpiperidine, 4-acryloyloxy-2,2,6,6-tetramethylpiperidine, 4-(phenylethoxy)-2,2,6,6-tetramethylpiperidine, 4-benzoyloxy-2,2,6,6-tetramethylpiperidine, 4-methoxy-2,2,6,6-tetramethylpiperidine, 4-stearyloxy-2,2,6,6-tetramethylpiperidine, 4-cyclohexyloxy-2,2,6,6-tetramethylpiperidine, 4-benzyloxy-2,2,6,6-tetramethylpiperidine, 4-phenoxy-2,2,6,6-tetramethylpiperidine, 4-(ethylcarbamoyloxy)-2,2,6,6-tetramethylpiperidine, 4-(cyclohexylcarbamoyloxy)-2,2,6,6-tetramethylpiperidine, 4-(phenylcarbamoyloxy)-2,2,6,6-tetramethylpiperidine, bis(2,2,6,6-tetramethyl-4-piperidyl)-carbonate, bis(2,2,6,6-tetramethyl-4-piperidyl)-oxalate, bis(2,2,6,6-tetramethyl-4-piperidyl)-malonate, bis(1,2,2,6,6-pentamethyl-4-piperidinyl) sebacate, bis-(N-methyl-2,2,6,6-tetramethyl-4-piperidinyl) sebacate, bis(2,2,6,6-tetramethyl-4-piperidyl)-sebacate, bis(2,2,6,6-tetramethyl-4-piperidyl)-adipate, bis(2,2,6,6-tetramethyl-4-piperidyl)-terephthalate, 1,2-bis(2,2,6,6-tetramethyl-4-piperidyloxy)-ethane, α,α'-bis(2,2,6,6-tetramethyl-4-piperidyloxy)-p-xylene, bis(2,2,6,6-tetramethyl-4-piperidyltolylene-2,4-dicarbamate, bis(2,2,6,6-tetramethyl-4-piperidyl)-hexamethylene-1,6-dicarbamate, tris(2,2,6,6-tetramethyl-4-piperidyl)-benzene-1,3,5-tricarboxylate, tris(2,2,6,6-tetramethyl-4-piperidyl)-benzene-1,3,4-tricarboxylate, 1-[2-{3-(3,5-dit-butyl-4-hydroxyphenyl)propionyloxy}butyl]-4-[3-(3,5-di-t-butyl-4-hydroxyphenyl)propionyloxy]2,2,6,6-tetramethylpiperidine, and condensates of 1,2,3,4-butanetetracarboxylic acid, 1,2,2,6,6-pentamethyl-4-piperidinol, and β,β,β',β'-tetramethyl-3,9-[2,4,8,10-tetraoxaspiro(5,5)undecane]diethanol. These hindered amine light stabilizers may be used alone or in combination of two or more thereof.

Among these, preferable weathering stabilizers are 2-[2'-hydroxy-3,5-bis(α,α-dimethylbenzyl)phenyl]benzotriazole, 2-(2'-hydroxy-3,5-di-t-butylphenyl)benzotriazole, 2-(2'-hydroxy-3,5-di-t-amylphenyl]benzotriazole, bis(1,2,2,6,6-pentamethyl-4-piperidinyl) sebacate, bis-(N-methyl-2,2,6,6-tetramethyl-4-piperidinyl) sebacate, bis(2,2,6,6-tetramethyl-4-piperidinyl) sebacate, and condensates of 1,2,3,4-butanetetracarboxylic acid, 1,2,2,6,6-pentamethyl-4-piperidinol, and β,β,β',β'-tetramethyl-3,9-[2,4,8,10-tetraoxaspiro(5,5)undecane]diethanol.

Preferred examples of release agents and lubricants include, but are not limited to, alcohols, fatty acids and esters thereof (i.e., fatty acid esters of alcohols), olefin compounds having an average degree of polymerization of 10 to 500, and silicones. These release agents and lubricants may be used alone or in combination of two or more thereof.

Examples of conductive agents include, but are not limited to, conductive carbon black, and metal powders or fibers. These conductive agents may be used alone or in combination of two or more thereof.

Examples of thermoplastic resins include, but are not limited to, polyolefin resins, acrylic resins, styrene resins, polycarbonate resins, and uncured epoxy resins. These thermoplastic resins may be used alone or in combination of two or more thereof.

The examples of thermoplastic resins also include modified products of the resins described above.

Examples of thermoplastic elastomers include, but are not limited to, polyurethane elastomers, polyester elastomers, polystyrene elastomers, and polyamide elastomers. These thermoplastic elastomers may be used alone or in combination of two or more thereof.

Examples of dyes/pigments include, but are not limited to, inorganic pigments, organic pigments, metallic pigments, and fluorescent pigments.

The inorganic pigment may be one which is generally used for coloring resins, and examples thereof include, but are not limited to, zinc sulfide, titanium oxide, barium sulfate, titanium yellow, cobalt blue, fired pigment, carbonate, phosphate, acetate, carbon black, acetylene black, and lamp black.

Examples of organic pigments include, but are not limited to, fused azo, ynone, monoazo, diazo, polyazo, anthraquinone, heterocyclic, perinone, quinacridone, thioindico, perylene, dioxazine, and phthalocyanine pigments.

These dyes/pigments may be used alone or in combination of two or more thereof.

Since the proportion of the dyes/pigments added varies greatly depending on the desired color tone, it is difficult to define a specific amount, but in general, the dyes/pigments are used in the range of 0.05 to 5 parts by mass relative to 100 parts by mass of the (a) polyacetal resin.

Examples inorganic fillers include, but are not limited to, fibrous, powder-like, plate-like or hollow fillers.

Examples of fibrous fillers include, but are not limited to, inorganic fibers such as glass fibers; carbon fibers; silicone fibers; silica/alumina fibers; zirconia fibers; boron nitride fibers; silicon nitride fibers; boron fibers; potassium titanate fibers; and fibers of metals such as stainless steel, aluminum, titanium, copper, and brass. Also included are short fiber whiskers such as potassium titanate whiskers and zinc oxide whiskers.

Examples of power-like fillers include, but are not limited to, talc; carbon black; silica; quartz powder; glass beads; glass powder; silicates such as calcium silicate, magnesium silicate, aluminum silicate, kaolin, clay, diatomaceous earth, and wollastonite; metal oxides such as iron oxide, titanium oxide, and alumina; metal sulfates such as calcium sulfate and barium sulfate; carbonates such as magnesium carbonate and dolomite; silicon carbide; silicon nitride; boron nitride; and various metal powders.

Examples of plate-like fillers include, but are not limited to, mica, glass flakes, and various metal foils.

Examples of hollow fillers include, but are not limited to, glass balloons, silica balloons, *Shirasu* balloons, and metal balloons.

Examples of organic fillers include, but are not limited to, high melting point organic fibrous fillers such as aromatic polyamide resins, fluororesins, and acrylic resins.

The inorganic or organic fillers described above may be used alone or in combination of two or more thereof. Though these fillers may be either surface-treated or non-surface-treated, from the viewpoint of surface smoothness and mechanical properties of a molded product obtained using the polyacetal resin composition, it may be preferable to use a filler that has been surface-treated with a surface treatment agent.

The surface treatment agent is not particularly limited, and any conventionally known surface treatment agent can be used.

Examples of surface treatment agents that can be used include, but are not limited to, various coupling treatment agents such as silane-based, titanate-based, aluminum-based, and zirconium-based agents, resin acids, organic carboxylic acids, organic carboxylates, and surfactants. Specific examples of surface treatment agents that can be used include, but are not limited to, N-(2-aminoethyl)-3-aminopropyltriethoxysilane, 3-glycidoxypropyltrimethoxysilane, isopropyltrisstearoyl titanate, diisopropoxyammonium ethyl acetate, and n-butylzirconate.

The sliding agent component may be a substance other than the (a) polyacetal resin and the (c) polyethylene glycol. In an aspect, polyethylene glycol is water-soluble, and the sliding agent component is not water-soluble. In the present disclosure, "water-soluble" means that 0.1 g or more is dissolved in 100 g of water at 23°C. The content ratio of the sliding agent component in the resin composition is preferably 0.01 parts by mass or more, or 0.5 parts by mass or more, or 1.0 part by mass, relative to 100 parts by ass of polyacetal resin, and is preferably 5 parts by mass or less, or 4 parts by mass or less, or 3 parts by mass or less. According to the content ratio in the above range, the wear amount of the sliding part can be suppressed. When a general filler (such as glass fibers) is used, a structure is formed in which the sliding agent component is unevenly distributed on the filler surface and many sliding agent molecules are layered, whereby the filler becomes more likely to be detached, the durability and quietness of the sliding part are reduced, and the slidability may also be reduced due to the detachment of the filler. Since the surface area of the fine cellulose fibers of the present disclosure is significantly larger than that of general fillers, the sliding agent component is less likely to be unevenly distributed on the surface of the fine cellulose fibers, and thus, is less likely to become layered. It is presumed that this allows the sliding part to have suitable durability, slidability, and quietness.

When the amount of the sliding agent component is 5 parts by mass or less relative to 100 parts by mass of the polyacetal resin, the occurrence of layer peeling and silver streaks in the molded product is more effectively suppressed, and when the amount of the sliding agent component is 0.01 parts by mass or more relative to the polyacetal resin, a more significant effect of reducing the amount of wear is obtained.

Examples for the sliding agent component include compounds having structures represented by the following formulas (1a), (1b) and (1c).

[R₁₁-(A₁-R₁₂)ₓ-A₂-R₁₃]_{y} (1a)

A₃-R₁₁-A₄ (1b)

R₁₄-A₅ (1c)

In formulas (1a) and (1b), R₁₁, R₁₂ and R₁₃ each independently represent an alkylene group of 1 to 7000 carbon atoms, a substituted alkylene group in which at least one hydrogen atom in a substituted or unsubstituted alkylene group of 1 to 7000 carbon atoms has been replaced with an aryl group of 6 to 7000 carbon atoms, an arylene group of 6 to 7000 carbon atoms, or a substituted arylene group in which at least one hydrogen atom in an arylene group of 6 to 7000 carbon atoms has been replaced with a substituted or unsubstituted alkyl group of 1 to 7000 carbon atoms.

In formula (1c), R₁₄ is an alkyl group of 1 to 7000 carbon atoms, a substituted alkyl group in which at least one hydrogen atom in a substituted or unsubstituted alkyl group of 1 to 7000 carbon atoms has been replaced with an aryl group of 6 to 7000 carbon atoms, an aryl group of 6 to 7000 carbon atoms, or a substituted aryl group in which at least one hydrogen atom in an aryl group of 6 to 7000 carbon atoms has been replaced with a substituted or unsubstituted alkyl group of 1 to 7000 carbon atoms.

These groups may be groups including double bonds, triple bonds or cyclic structures.

In formula (1a), A₁ and A₂ each independently represent an ester bond, thioester bond, amide bond, thioamide bond, imide bond, ureido bond, imine bond, urea bond, ketoxime bond, azo bond, ether bond, thioether bond, urethane bond, thiourethane bond, sulfide bond, disulfide bond or trisulfide bond.

In formulas (1b) and (1c), A₃, A₄ and A₅ each independently represent a hydroxyl group, an acyl group (such as an acetyl group), or an aldehyde, carboxyl, amino, sulfo, amidine, azide, cyano, thiol, sulfenic acid, isocyanide, ketene, isocyanate, thioisocyanate, nitro or thiol group.

From the viewpoint of abrasion properties when sliding under small loads, the structures represented by formulas (1a), (1b) and (1c) for the sliding agent component are preferably in the following ranges.

Specifically, the number of carbon atoms for R₁₁, R₁₂, R₁₃ and R₁₄ is preferably 2 to 7000, more preferably 3 to 6800 and even more preferably 4 to 6500.

In formula (1a), x represents an integer of 1 to 1000 and preferably an integer of 1 to 100. The letter y represents an integer of 1 to 1000 and preferably an integer of 1 to 200.

In formula (1a) A₁ and A₂ preferably each independently represent an ester bond, thioester bond, amide bond, imide bond, ureido bond, imine bond, urea bond, ketoxime bond or ether bond and urethane bond, and more preferably A₁ and A₂ each independently represent an ester bond, amide bond, imide bond, ureido bond, imine bond, urea bond, ketoxime bond, ether bond or urethane bond.

In formulas (1b) and (1c), A₃, A₄ and A₅ preferably each independently represent a hydroxyl group, acyl group (such as an acetyl group), or an aldehyde, carboxyl, amino, azide, cyano, thiol, isocyanide, ketene, isocyanate or thioisocyanate group, and more preferably A₃, A₄ and A₅ each independently represent a hydroxyl group or acyl group (such as an acetyl group), or an aldehyde, carboxyl, amino, cyano, isocyanide, ketene or isocyanate group.

Specific examples for the sliding agent component include, but are not particularly limited to, one or more compounds selected from the group consisting of alcohols, amines, carboxylic acids, hydroxy acids, amides, esters, polyoxyalkylene glycols, silicone oils and waxes.

Alcohols are preferably saturated or unsaturated monohydric or polyhydric alcohols of 6 to 7000 carbon atoms. Specific examples include, but are not particularly limited to, octyl alcohol, nonyl alcohol, decyl alcohol, undecyl alcohol, lauryl alcohol, tridecyl alcohol, myristyl alcohol, pentadecyl alcohol, cetyl alcohol, heptadecyl alcohol, stearyl alcohol, oleyl alcohol, linoleyl alcohol, nonadecyl alcohol, eicosyl alcohol, ceryl alcohol, behenyl alcohol, melissyl alcohol, hexyldecyl alcohol, octyldodecyl alcohol, decylmyristyl alcohol, decylstearyl alcohol, Unilin alcohol, ethylene glycol, diethylene glycol, triethylene glycol, propylene glycol, dipropylene glycol, butanediol, pentanediol, hexanediol, glycerin, diglycerin, triglycerin, threitol, erythritol, pentaerythritol, arabitol, ribitol, xylitol, sorbite, sorbitan, sorbitol and mannitol.

Alcohols of 11 or more carbon atoms are preferred among these from the viewpoint of sliding efficiency. More preferred are alcohols of 12 or more carbon atoms, with alcohols of 13 or more carbon atoms being even more preferred. Saturated alcohols are especially preferred among these.

Preferred for use among those mentioned above are stearyl alcohol, oleyl alcohol, linoleyl alcohol, behenyl alcohol, ethylene glycol, propylene glycol, diethylene glycol and triethylene glycol, with behenyl alcohol, diethylene glycol and triethylene glycol being especially preferred for use.

Amines include, but are not limited to, the following examples: primary amines, secondary amines and tertiary amines.

Examples of primary amines include, but are not particularly limited to, methylamine, ethylamine, propaneamine, butaneamine, pentaneamine, hexaneamine, heptaneamine, octaneamine, cyclohexylamine, ethylenediamine, aniline, mensendiamine, isophorone diamine, xylenediamine, metaphenylenediamine and diaminodiphenylamine.

Examples of secondary amines include, but are not particularly limited to, dimethylamine, diethylamine, N-methylethylamine, diphenylamine, tetramethylethylenediamine, piperidine and N,N-dimethylpiperazine.

Examples of tertiary amines include, but are not particularly limited to, trimethylamine, triethylamine, hexamethylenediamine, N,N-diisopropylethylamine, pyridine, N,N-dimethyl-4-aminopyridine, triethylenediamine and benzyldimethylamine.

Examples of special amines include, but are not particularly limited to, diethylenetriamine, triethylenetetramine, tetraethylenepentamine, diethylaminopropylamine and N-aminoethylpiperazine. Preferred for use among these are hexaneamine, heptaneamine, octaneamine, tetramethylethylenediamine, N,N-dimethylpiperazine and hexamethylenediamine, among which heptaneamine, octaneamine, tetramethylethylenediamine and hexamethylenediamine are especially preferred for use.

Carboxylic acids are preferably saturated or unsaturated monobasic or polybasic aliphatic carboxylic acids of 6 to 7000 carbon atoms. Specific examples include, but are not particularly limited to, caproic acid, enanthic acid, caprylic acid, undecylic acid, pelargonic acid, lauric acid, tridecylic acid, myristic acid, pentadecylic acid, palmitic acid, margaric acid, stearic acid, nanodecanoic acid, arachic acid, behenic acid, lignoceric acid, cerotic acid, heptaconic acid, montanic acid, adipic acid, pimelic acid, suberic acid, azelaic acid, sebacic acid, melissic acid, lacceric acid, undecylenic acid, elaidic acid, cetoleic acid, brassidic acid, sorbic acid, palmitoleic acid, oleic acid, vaccenic acid, linoleic acid, linolenic acid, eleostearic acid, arachidonic acid, nervonic acid, erucic acid, propiolic acid and stearolic acid.

Fatty acids of 10 or more carbon atoms are preferred among these from the viewpoint of sliding efficiency. More preferred are fatty acids of 11 or more carbon atoms, with fatty acids of 12 or more carbon atoms being even more preferred. Saturated fatty acids are especially preferred among these. Palmitic acid, stearic acid, behenic acid, montanic acid, adipic acid and sebacic acid are more preferred among these saturated fatty acids because they are also readily available in the industry.

Naturally occurring fatty acids and their mixtures that contain these components may also be used. Such fatty acids may also be substituted with hydroxy groups, or they may be synthetic fatty acids obtained by carboxyl modification of the ends of Unilin alcohols (synthetic aliphatic alcohols).

Hydroxy acids are not particularly restricted and examples include aliphatic hydroxy acids and aromatic hydroxy acids. Examples of aliphatic hydroxy acids include, but are not particularly limited to, glycolic acid, hydroxypropionic acid, hydroxybutanoic acid, hydroxypentanoic acid, hydroxyhexanoic acid, hydroxyheptanoic acid, hydroxynonanoic acid, hydroxydecanoic acid, hydroxyundecanoic acid, hydroxydodecanoic acid, hydroxytridecanoic acid, hydroxytetradecanoic acid, hydroxypentadecanoic acid, hydroxyhexadecanoic acid, hydroxyheptadecanoic acid, hydroxyoctadecanoic acid, hydroxynonadecanoic acid, hydroxyeicosanoic acid, hydroxydocosanoic acid, hydroxytetradocosanoic acid, hydroxyhexadocosanoic acid, hydroxyoctadocosanoic acid, lactic acid, tartronic acid, glycerinic acid, hydroxybutyric acid, 2-hydroxybutyric acid, 3-hydroxybutyric acid, γ-hydroxybutyric acid, malic acid, tartaric acid, citramalic acid, citric acid, isocitric acid, leucinic acid, mevalonic acid, pantoic acid, ricinolic acid, ricinelaidic acid, cerebronic acid, quinic acid and shikimic acid, as well as their isomers.

Examples of aromatic hydroxy acids include, but are not particularly limited to, monohydroxybenzoic acid derivatives such as salicylic acid, creosotic acid (homosalicylic acid, hydroxy(methyl)benzoic acid), vanillic acid and syringic acid, dihydroxybenzoic acid derivatives such as pyrocatechuic acid, resorcylic acid, protocatechuic acid, gentisic acid and orsellinic acid, trihydroxybenzoic acid derivatives such as gallic acid, phenylacetic acid derivatives such as mandelic acid, benzilic acid, atrolactic acid and cinnamic acid, or hydrocinnamic acid derivatives such as melilotic acid, phloretic acid, coumaric acid, umbellic acid, caffeic acid, ferulic acid and sinapic acid, as well as their isomers. Among these, aliphatic hydroxy acids are more preferred, and among aliphatic hydroxy acids, aliphatic hydroxy acids of 5 to 30 carbon atoms are more preferred, and aliphatic hydroxy acids of 8 to 28 carbon atoms are especially preferred.

Amides are preferably saturated or unsaturated monovalent or polyvalent aliphatic amides of 6 to 7000 carbon atoms. Specific examples include, but are not particularly limited to, primary amides which are saturated or unsaturated amides such as heptaneamide, octaneamide, nonaneamide, decaneamide, undecaneamide, laurylamide, tridecylamide, myristylamide, pentadecylamide, cetylamide, heptadecylamide, stearylamide, oleylamide, nonadecylamide, eicosylamide, cerylamide, behenylamide, melissylamide, hexyldecylamide, octyldodecylamide, lauric acid amide, palmitic acid amide, stearic acid amide, behenic acid amide, hydroxystearic acid amide, oleic acid amide or erucic acid amide.

Examples of secondary amides include, but are not limited to, the following: saturated or unsaturated amides such as N-oleylpalmitic acid amide, N-stearylstearic acid amide, N-stearyloleic acid amide, N-oleylstearic acid amide, N-stearylerucic acid amide, methylene bisstearic acid amide, ethylene biscapric acid amide, ethylene bislauric acid amide, ethylene bisstearic acid amide, ethylene bishydroxystearic acid amide, ethylene bisbehenic acid amide, ethylene bisoleic acid amide, ethylene biserucic acid amide, hexamethylene bisstearic acid amide, hexamethylene bisbehenic acid amide, hexamethylene bisoleic acid amide and hexamethylenehydroxystearic acid amide.

Examples of tertiary amides include, but are not limited to, the following: saturated or unsaturated amides such as N,N-distearyladipic acid amide, N,N-distearylsebacic acid amide, N,N-dioleyladipic acid amide, N,N-dioleylsebacic acid amide and N,N-distearylisophthalic acid amide.

Preferred for use among these are palmitic acid amide, stearic acid amide, behenic acid amide, hydroxystearic acid amide, oleic acid amide, erucic acid amide and N-stearylstearic acid amide.

Preferred for use among these are methylene bisstearic acid amide, ethylenebislauric acid amide, ethylene bisstearic acid amide and ethylene bisbehenic acid amide. Amides of 10 or more carbon atoms are preferred among these from the viewpoint of sliding efficiency. More preferred are amides of 11 or more carbon atoms, with amides of 13 or more carbon atoms being even more preferred. Particularly preferred among these are saturated aliphatic amides.

Preferred esters are reaction products obtained by reacting the aforementioned alcohols and carboxylic acids or hydroxy acids to form ester bonds.

Specific examples include, but are not particularly limited to, butyl stearate, 2-ethylhexyl palmitate, 2-ethylhexyl stearate, behenic acid monoglyceride, cetyl 2-ethylhexanoate, isopropyl myristate, isopropyl palmitate, cholesteryl isostearate, methyl laurate, methyl oleate, methyl stearate, cetyl myristate, myristyl myristate, octyldodecylpentaerythritol monooleate myristate, pentaerythritol monostearate, pentaerythritoltetrapalmitate, stearyl stearate, isotridecyl stearate, 2-ethylhexanoic acid triglyceride, diisodecyl adipate, ethyleneglycol monolaurate, ethyleneglycol dilaurate, ethyleneglycol monostearate, ethyleneglycol distearate, triethyleneglycol monostearate, triethyleneglycol distearate, ethyleneglycol monooleate, ethyleneglycol dioleate, polyethyleneglycol monolaurate, polyethyleneglycol monostearate, polyethyleneglycol distearate, polyethyleneglycol monooleate, glycerin monostearate, glycerin distearate, glycerin monolaurate, glycerin dilaurate, glycerin monooleate and glycerin dioleate.

Preferred for use among these are cetyl myristate, diisodecyl adipate, ethyleneglycol monostearate, ethyleneglycol distearate, triethyleneglycol monostearate, triethyleneglycol distearate, polyethyleneglycol monostearate and polyethyleneglycol distearate, with cetyl myristate, diisodecyl adipate and ethyleneglycol distearate being especially preferred for use.

Polyoxyalkylene glycols include, but are not limited to, the following the first to third types of polyoxyalkylene glycols, for example.

The first type of polyoxyalkylene glycols are polycondensates with alkylene glycols as monomers. Examples of such polycondensates include, but are not limited to, polyethylene glycol, polypropylene glycol, and blocked copolymers and random copolymers of ethylene glycol and propylene glycol. The preferred range of the degree of polymerization of such polycondensates is 5 to 2500, with 10 to 2300 being a more preferred range.

The second type of polyoxyalkylene glycols are ether compounds of aliphatic alcohols and polycondensates mentioned for the first type of polyoxyalkylene glycols. Examples of such ether compounds include, but are not limited to, polyethyleneglycol oleyl ethers (ethylene oxide polymerization degree: 5 to 500), polyethyleneglycol cetyl ethers (ethylene oxide polymerization degree: 5 to 500), polyethyleneglycol stearyl ethers (ethylene oxide polymerization degree: 5 to 300), polyethyleneglycol lauryl ethers (ethylene oxide polymerization degree: 5 to 300), polyethyleneglycol tridecyl ethers (ethylene oxide polymerization degree: 5 to 300), polyethyleneglycol nonylphenyl ethers (ethylene oxide polymerization degree: 2 to 1000) and polyethylene glycol oxyphenyl ethers (ethylene oxide polymerization degree: 4 to 500).

The third type of polyoxyalkylene glycols are ester compounds of higher fatty acids and the polycondensates mentioned for the first type of polyoxyalkylene glycols. Examples of such ester compounds include, but are not limited to, polyethyleneglycol monolaurate (ethylene oxide polymerization degree: 2 to 300), polyethyleneglycol monostearate (ethylene oxide polymerization degree: 2 to 500) and polyethyleneglycol monooleate (ethylene oxide polymerization degree: 2 to 500).

Waxes are not particularly restricted, and examples include slack wax, beeswax, whale wax, shellac wax, wool wax, carbana wax, wood wax, rice wax, candelilla wax, Japan wax, paraffin wax, microcrystalline wax, montan wax, Fischer-Tropsch wax, polyethylene wax, polypropylene wax and their high-density polymerized forms, low-density polymerized forms, oxidized forms, acid modified forms and special monomer-modified forms.

Preferred for use among these are carnauba wax, rice wax, candelilla wax, paraffin wax, montan wax, polyethylene wax and their high-density polymerized forms, low-density polymerized forms, oxidized forms, acid modified forms and special monomer-modified forms, among which carnauba wax, rice wax, candelilla wax, paraffin wax, polyethylene wax and their high-density polymerized forms, low-density polymerized forms, oxidized forms, acid modified forms and special monomer-modified forms are especially preferred for use.

Preferred among these as the sliding agent component are one or more compounds selected from the group consisting of alcohols, amines, carboxylic acids, esters, amide compounds of monovalent or divalent amines and carboxylic acids, and waxes.

A paraffin wax, a polyethylene wax or a high density polymerized form, low-density polymerized form, oxidized form, acid modified form or special monomer-modified form thereof for the sliding agent component to be used in the resin composition of this embodiment is not particularly restricted, but it can be obtained by a method of introducing acidic groups by oxidation reaction of the polyolefin wax, oxidatively decomposing a polyolefin, reacting an inorganic acid, organic acid or unsaturated carboxylic acid with a polyolefin wax to introduce polar groups such as carboxyl groups or sulfonic acid groups, or introducing a monomer with an acidic group during polymerization of a polyolefin wax.

These are commercially and readily available under names such as oxidized-modified or acid-modified polyolefin waxes.

Examples of polyolefin waxes include, but are not limited to, paraffin waxes, microcrystalline waxes, montan waxes, Fischer-Tropsch waxes, polyethylene waxes, polypropylene waxes, and their high-density polymerized forms, low-density polymerized forms and special monomer-modified forms.

Examples of polyolefins include polyethylene, polypropylene, ethylene-propylene copolymer, ethylene-butene copolymer, ethylene-octene copolymer, polypropylene-butene copolymer, polybutene, hydrogenated polybutadiene, ethylene-acrylic acid ester copolymer, ethylene-methacrylic acid ester copolymer, ethylene-acrylic acid copolymer and ethylene-vinyl acetate copolymer.

From the viewpoint of an effect of improved slidability, the sliding agent component is preferably a paraffin wax, polyethylene wax, acid-modified polypropylene wax, polyethylene (high-pressure method low-density polyethylene, linear low-density polyethylene or ultra-low-density polyethylene), polypropylene, ethylene-propylene copolymer or acid-modified ethylene-butene copolymer.

The sliding agent component is preferably a modified wax comprising an acid-modified polyethylene and/or acid-modified polypropylene.

The sliding agent component may be a single one used alone, or a combination of two or more.

For this embodiment, the sliding agent component can be separated from the molded article such as the sliding part for determination of its molecular structure, molecular weight, melting point, acid value and viscosity.

The sliding agent component in the molded article may be isolated by a procedure such as filtration after dissolution of the molded article, followed by purification by a procedure such as recrystallization or reprecipitation of the sliding agent component. The sliding agent component can be subjected to measurement by ¹H-NMR, ¹³C-NMR, two-dimensional NMR or MALDI-TOF MS, to determine the molecular structure, such as its repeating structure or branched structure, or positional information relating to its functional groups.

When the sliding agent component is an acid-modified polyethylene and/or acid-modified polypropylene, the acid value is preferably in the range of 0 to 85 mg-KOH/g. The preferred lower limit for the acid value is not particularly restricted but is preferably 0 mg-KOH/g or greater. The preferred upper limit for the acid value is 83 mg-KOH/g, more preferably 80 mg-KOH/g and even more preferably 75 mg-KOH/g. An acid value within this range will tend to inhibit discoloration during drying and result in satisfactory abrasion resistance during high-temperature abrasion under small loads. The acid value of the sliding agent component can be measured by the method according to JIS K0070.

The acid value of the sliding agent component can be controlled by the method described in Example 1 or 2 of Japanese Unexamined Patent Publication No. 2004-75749, for example, or by a method of adjusting or controlling the amount of acidic groups introduced and/or the amount of polar groups introduced, by thermal decomposition of commercially available high-density polyethylene under an oxygen atmosphere. When the sliding agent component is acid-modified polyethylene and/or acid-modified polypropylene, a commercial product may be used.

When the sliding agent component is an acid-modified polyethylene and/or acid-modified polypropylene, the melt viscosity at 140°C is, from the viewpoint of workability during melt kneading of the resin composition, preferably 1 mPa·s or more, 20 mPa·s or more, 25 mPa·s or more, 30 mPa·s or more, or 50 mPa·s or more, and the upper limit is preferably 3000 mPa·s or less, 2850 mPa·s or less, 2800 mPa·s or less, 2700 mPa·s or less, 2650 mPa·s or less, or 2000 mPa·s or less.

When the sliding agent component is acid-modified polyethylene and/or acid-modified polypropylene, the melt viscosity at 180°C is preferably 100 mPa·s or more, 110 mPa.s or more, 140 mPa·s or more, 160 mPa·s or more, or 300 mPa·s or more, and preferably 2900 mP·s or less, 2850 mPa·s or less, 2800 mPa·s or less, 2700 mPa·s or less, 2650 mPa·s or less, 2000 mPa·s or less, or 1600 mPa·s or less.

Limiting the melt viscosity to within this range when the sliding agent component is acid-modified polyethylene and/or acid-modified polypropylene will tend to result in complete melting of the resin pellets during melt kneading of the resin composition as a constituent material of the sliding part of this embodiment, and more thorough kneading.

When the sliding agent component is acid-modified polyethylene and/or acid-modified polypropylene, the melt viscosity at 140°C and 180°C can be measured using a Brookfield viscometer.

According to one aspect, the sliding agent component is a lubricant oil. Lubricant oils include, but are not limited to, any substances that can improve the abrasion/wear properties of the molded resin, examples being natural oils such as engine oils and cylinder oils, synthetic hydrocarbons including paraffinic oils (such as Diana Process Oil PS32 by Idemitsu Kosan Co., Ltd.), naphthene-based oils (such as Diana Process Oil NS90S by Idemitsu Kosan Co., Ltd.) and aroma oils (such as Diana Process Oil AC12 by Idemitsu Kosan Co., Ltd.), and silicone-based oils (such as G30 Series by Shin-Etsu Chemical Co., Ltd.) (polydimethylsiloxane and other silicone oils, or silicone rubber or modified silicone rubber), appropriately selected among common commercially available lubricant oils, and used either directly or in appropriate combinations as desired. Paraffinic oils and silicone-based oils are preferred because they are superior from the viewpoint of slidability, and are also readily available in the industry. These lubricant oils may be used alone or in combinations.

The molecular weight of the lubricating oil is preferably 100 or more, or 400 or more, or 500 or more, from the viewpoint of suitable sliding properties of the lubricating oil, and is preferably 5 million or less, or 2 million or less, or 1 million or less from the viewpoint of suitable dispersion of the lubricating oil and improved wear resistance. From the viewpoint of improving the wear resistance of the sliding part by maintaining the fluidity of the lubricating oil present on the molded product surface and suppressing abrasive wear, the melting point of the lubricating oil is preferably -50°C or higher, or -30°C or higher, or -20°C or higher, and is preferably 50°C or lower, or 30°C or lower, or 20°C or lower, in order to facilitate mixing with the polyacetal resin and improve the dispersibility of the lubricating oil. In a preferred aspect, the melting point is 2.5°C lower than the pour point of the lubricating oil. The pour point can be measured in accordance with JIS K2269.

The content ratio of the lubricating oil to 100 parts by mass of the polyacetal resin is preferably 0.1 parts by mass or more, or 0.2 parts by mass or more, or 0.3 parts by mass or more, from the viewpoint of improving or stabilizing the wear resistance and sliding properties, and from the viewpoint of obtaining a resin composition with suitable strength capable of withstanding applications such as high torque gears by suppressing softening of the resin, the content is preferably 5.0 parts by mass or less, or 4.5 parts by mass or less, or 4.2 parts by mass or less.

In the sliding part, the weight-average molecular weight of the sliding agent component is important because the dispersion state of the sliding agent component near the surface layer of the member has a large effect on the sliding properties. In an aspect, the preferable lower limit of the weight-average molecular weight of the sliding agent component is 500, more preferably 600, and particularly preferably 700. The preferred upper limit of the weight-average molecular weight of the sliding agent component is not particularly limited, and is 100,000 as a guideline for ease of handling. In the sliding part of the present embodiment, by setting the weight-average molecular weight of the sliding agent component to the range described above, suitable wear resistance that can withstand repeated sliding can be obtained.

The lower limit of the molecular weight distribution of the sliding agent component is not particularly limited, and from the viewpoint of the stability of the friction coefficient during sliding, it is recommended that the lower limit of the molecular weight distribution be close to 1.0. The upper limit of the molecular weight distribution of the sliding agent component is preferably 9.0, 8.5, 8.0, or 7.5.

The weight-average molecular weight of the sliding agent component, when the weight-average molecular weight is 1000 or less, is measured by liquid chromatography/mass spectrometry, and when the weight-average molecular weight exceeds 1000, is measured by gel permeation chromatography and is expressed as a weight average molecular weight converted into a standard polystyrene or the like.

The melting point of the sliding agent component is preferably 40°C or higher, or 45°C or higher, or 50°C or higher, or 80°C or higher from the viewpoint of improving the wear resistance of the sliding part under high temperature conditions, and from the viewpoint of suitable dispersion of the sliding agent component in the resin during processing, the melting point is preferably 150°C or less, or 140°C or less, or 135°C or less, or 130°C or less. The melting point of the sliding agent component can be measured by a method in accordance with JIS K 7121 (DSC method).

### <<Production Method for Polyacetal Resin Composition>>

The specific aspect of the production method for a polyacetal resin composition of the present embodiment is not particularly limited, but in an aspect, the production method for a polyacetal resin composition comprises melt-kneading (a) a polyacetal resin, (b) fine cellulose fibers, and (c) polyethylene glycol, preferably comprises melt-kneading (a) a polyacetal resin, (b) fine cellulose fibers, (c) polyethylene glycol, (d) a hindered phenolic antioxidant, and (e) a nitrogen-containing compound, and more preferably comprises melt-kneading (a) 100 parts by mass of a polyacetal resin, (b) 1 to 150 parts by mass of fine cellulose fibers having a fiber diameter of 2 to 1000 nm, (c) 0.1 to 100 parts by mass of polyethylene glycol, (d) 0.01 to 3 parts by mass of a hindered phenolic antioxidant, and (e) 0.01 to 3 parts by mass of at least one nitrogen-containing compound selected from the group consisting of aminotriazine compounds, guanamine compounds, hydrazide compounds, and polyamides.

More specifically, a method of mixing the necessary components and kneading the obtained mixture using a melt kneading device such as an extruder to obtain a polyacetal resin composition as pellets can be exemplified. As the extruder, a co-rotating twin screw extruder is preferably used for the purpose of improving the dispersibility of fine cellulose fibers. In an aspect, LID obtained by dividing the cylinder length (L) of the extruder by the screw diameter (D) may be 40 or more, or 50 or more. In an aspect, the screw rotational speed may be 50 ppm or more, 100 ppm or more, or 150 ppm or more, and 800 rpm or less, or 600 rpm or less. Each screw in the cylinder of the extruder may be optimized by combining a conveying screw with an elliptical two-blade screw shape, a kneading element referred to as a kneading disk, or the like.

The temperature of the mixed components during mixing is preferably 170°C or higher, 180°C or higher, or 190°C or higher from the viewpoint of high dispersion of the fine cellulose fibers, and from the viewpoint of suppressing decomposition of the mixed components, particularly the decomposition of the polyacetal resin and the cellulose fine fibers, the temperature is preferably 250°C or less, 240°C or less, or 230°C or less.

The pressure applied to the mixed components is preferably maintained at 30 MPa or less, 20 MPa or less, or 10 MPa or less throughout the mixing step in order to suppress the generation of low molecular weight components due to the scission of cellulose molecules and maintain the mechanical strength of the resin composition. The pressure applied to the mixed components may be preferably 0 MPa or more, 0.1 MPa or more, 0.2 MPa or more, or 0.5 MPa or more in part or all of the mixing step in order to highly disperse the cellulose fine fibers.

### <Use of Cellulose Fiber-Containing Powder in Polyacetal Resin Composition>

In order to highly disperse the fine cellulose fibers in the polyacetal resin, rather than a method of defibrating cellulose by means of shearing in an extruder to obtain fine cellulose fibers, a method of preparing a mixed powder of fine cellulose fibers that have been defibrated in advance (fiber diameter is defibrated to 2 to 1000 nm in an aspect) and polyethylene glycol, and then melt-kneading the mixed powder and polyacetal resin is preferable. By including polyethylene glycol in the fine cellulose fibers, the polyethylene glycol functions as a "priming agent" to facilitate the penetration of the polyacetal resin into the gaps between the fine cellulose fibers, which is presumed to improve the dispersion of fine cellulose fibers in the polyacetal resin composite.

In an aspect, the mixed powder can be prepared by drying a fine cellulose fiber slurry in which fine cellulose fibers are dispersed in a liquid medium. In an aspect, the liquid medium is water and/or another medium (for example, an organic solvent, inorganic acid, base, and/or ionic liquid).

From the viewpoint of process efficiency during drying, the concentration of the fine cellulose fibers in the fine cellulose fiber slurry is preferably 1% by mass or more, or 2% by mass or more, or 3% by mass or more, or 5% by mass or more, or 10% by mass or more, or 15% by mass or more, or 20% by mass or more, or 25% by mass or more, and from the viewpoint of avoiding an excessive increase in the viscosity of the slurry and solidification due to aggregation and maintaining suitable handleability, the concentration is preferably 60% by mass or less, or 55% by mass or less, or 50% by mass or less, or 45% by mass or less, or 40% by mass or less, or 35% by mass or less. For example, fine cellulose fibers are often produced in a dilute dispersion, and the concentration of the fine cellulose fibers in the slurry may be adjusted to the above-mentioned preferred range by concentrating such a dilute dispersion. For concentration, methods such as suction filtration, pressure filtration, centrifugal deliquation, and heating can be used.

The polyethylene glycol and arbitrary additional components other than the fine cellulose fibers may be added before, during, and/or after drying of the fine cellulose fiber slurry.

The dryer is not particularly limited, and examples thereof include a kneader, planetary mixer, Henschel mixer, high speed mixer, propeller mixer, ribbon mixer, single or twin screw extruder, Banbury mixer, freeze dryer, shelf dryer, spray dryer, or fluidized bed dryer.

### [Moisture Content]

The liquid medium content ratio of the mixed powder may preferably be 50% by mass or less, or 40% by mass or less, or 30% by mass or less, or 20% by mass or less, or 10% by mass or less, or 5% by mass or less. The liquid medium content ratio may be 0% by mass, but from the viewpoint of ease of production of the mixed powder, it may be, for example, 0.01% by mass or more, 0.1% by mass or more, 1% by mass or more, or 1.5% by mass or more. The liquid medium content ratio is a value measured using an infrared moisture analyzer.

### [Average Particle Size]

The average particle size of the mixed powder is preferably 1 µm or more, or 10 µm or more, or 50 µm or more, or 100 µm or more, or 200 µm or more, or 500 µm or more, and is preferably 5000 µm or less, or 4000 µm or less, or 3000 µm or less, or 2000 µm or less. The average particle size is a value measured in a dry state by a laser diffraction method.

### [Loose Bulk Density]

In an aspect, from the viewpoints of suitable fluidity of the mixed powder, excellent feedability to a twin-screw extruder, and suppression of migration of the dispersant to the resin, the loose bulk density of the mixed powder is preferably 0.01 g/cm³ or more, or 0.05 g/cm³ or more, or 0.10 g/cm³ or more, or 0.15 g/cm³ or more, or 0.20 g/cm³ or more, or 0.25 g/cm³ or more, or 0.30 g/cm³ or more, or 0.35 g/cm³ or more, or 0.40 g/cm³ or more, or 0.45 g/cm³ or more, or 0.50 g/cm³ or more, and is preferably 0.85 g/cm³ or less, or 0.80 g/cm³ or less, or 0.75 g/cm³ or less, from the viewpoints that the mixed powder is easily dissolved in the resin so that the fine cellulose fibers can be suitably dispersed in the resin, and that the mixed powder is not excessively heavy, whereby poor mixing of the mixed powder with the resin can be avoided.

### [Compacted Bulk Density]

The compacted bulk density of the mixed powder is controlled in a range that is useful for controlling the loose bulk density and the degree of compaction within the ranges of the present disclosure, and in an aspect, is preferably 0.01 g/cm³ or more, or 0.1 g/cm³ or more, or 0.15 g/cm³ or more, or 0.2 g/cm³ or more, or 0.3 g/cm³ or more, or 0.4 g/cm³ or more, or 0.5 g/cm³ or more, or 0.6 g/cm³ or more, and is preferably 0.95 g/cm³ or less, or 0.9 g/cm³ or less, or 0.85 g/cm³ or less.

### [Degree of Compaction]

The degree of compaction is a value calculated by the formula: degree of compaction = (compacted bulk density - loose bulk density) / compacted bulk density. The loose bulk density and compacted bulk density are values measured by the following method.

For the loose bulk density, the cellulose fiber-containing powder is charged into a 100 mL (inner diameter 50.46 mm × depth 50 mm) stainless steel bottomed cylindrical container using a measuring spoon at a rate of 10 g/min until it overflows, and after leveling off the powder, the weight thereof is measured to the nearest 0.01 g. The number average value of the weight measured three times is divided by the internal volume of the bottomed cylindrical container to calculate the loose bulk density.

For the compacted bulk density, a resin adapter (inner diameter 50.46 mm × length 40 mm) of sufficient capacity is connected to the top of a bottomed cylindrical container similar to that used for the loose bulk density so as to tightly fit, and after charging the cellulose fiber-containing powder until it overflows using the same procedure as for measuring loose bulk density, with the adapter connected, vibrations of 1.5 mm amplitude and 50 Hz are applied to the bottomed cylindrical container for 30 seconds using a motor with an eccentric weight attached to the rotating shaft. Next, the adapter is removed, the powder is levelled off, and the weight is measured to the nearest 0.01 g. The number average value of the weight measured three times is divided by the internal volume of the bottomed cylindrical container to calculate the compacted bulk density.

In an aspect, the degree of compaction represents the degree of bulk loss. In an aspect, the degree of compaction of the mixed powder is preferably 1% or more, or 5% or more, or 10% or more, or 15% or more, or 20% or more, or 25% or more from the viewpoint of avoiding excessively high fluidity of the mixed powder. From the viewpoint of the mixed powder having suitable fluidity and being excellent in feedability to a twin-screw extruder, being excellent in handleability (specifically, being unlikely to scatter, float, or form dust), being able to suitably disperse the mixed powder in the resin, and being able to suppress migration of the dispersant to the resin, the degree of compaction is preferably 50% or less, or 45% or less, or 40% or less, or 35% or less, or 30% or less.

The loose bulk density, compacted bulk density, and degree of compaction are measured using a powder tester (model number: PT-X) manufactured by Hosokawa Micron Corp. The compacted bulk density is measured by tapping 180 times.

A preferred aspect provides a mixed powder that is a cellulose fiber-containing powder for a polyacetal resin composition. In an aspect, the cellulose fiber-containing powder contains (b) fine cellulose fibers having a fiber diameter of 2 to 1000 nm and (c) polyethylene glycol. In the cellulose fiber-containing powder, the (c) polyethylene glycol is a polyethylene glycol in which an ethylene ratio R (%), which is a ratio of the number of oxyethylene units to the total number of oxymethylene units and oxyethylene units of the polyacetal resin contained in the polyacetal resin composition, and the number of oxyethylene repeating units n of the (c) polyethylene glycol satisfy the relationship of the following formula: $\left(R+0.5\right) / 0.015 \leq n \leq \left(R+10\right) / 0.015 .$

Suitable examples of the polyacetal resin, fine cellulose fibers, and polyethylene glycol may be as described above, and description thereof will not be repeated here.

A preferred aspect also provides a production method for a cellulose fiber-containing powder for a polyacetal resin composition, in which the cellulose fiber-containing powder contains (b) fine cellulose fibers having a fiber diameter of 2 to 1000 nm, and (c) polyethylene glycol.

This method comprises a mixing step of mixing the (b) fine cellulose fibers and the (c) polyethylene glycol to obtain a cellulose fiber-containing powder. In this method, the (c) polyethylene glycol is selected such that the ethylene ratio R (%), which is the ratio of the number of oxyethylene units to the total number of oxymethylene units and oxyethylene units of the polyacetal resin contained in the polyacetal resin composition, and the number of oxyethylene repeating units n of the (c) polyethylene glycol satisfy the relationship of the following formula: $\left(R+0.5\right) / 0.015 \leq n \leq \left(R+10\right) / 0.015 .$

Suitable examples of the polyacetal resin, the fine cellulose fibers, and the polyethylene glycol may be as described above, and description thereof will not be repeated here.

A preferred aspect also provides a production method for a polyacetal resin composition using a cellulose fiber-containing powder, the method comprising:
a powder preparation step for obtaining a cellulose fiber-containing powder comprising (b) fine cellulose fibers having a fiber diameter of 2 to 1000 nm and (c) polyethylene glycol; and
a resin composition preparation step in which the cellulose fiber-containing powder and (a) a polyacetal resin are mixed to obtain a polyacetal resin composition.
In this method, the (a) polyacetal resin is selected such that an ethylene ratio R (%), which is a ratio of a number of oxyethylene units to a total number of oxymethylene units and oxyethylene units of the (a) polyacetal resin, and a number of oxyethylene repeating units n of the (c) polyethylene glycol satisfy the relationship of the following formula: $\left(R+0.5\right) / 0.015 \leq n \leq \left(R+10\right) / 0.015 .$

Suitable examples of the polyacetal resin, the fine cellulose fibers, and the polyethylene glycol may be as those described above, and description thereof will not be repeated here.

### <<Characteristics of Resin Composition>>

### <Flexural Modulus>

The flexural modulus of the polyacetal resin composition is preferably 3000 MPa or more, or 4000 MPa or more, or 4500 MPa or more, or 5000 MPa or more from the viewpoint of obtaining suitable durability of the molded product, for example, a sliding part, and from the viewpoint of ease of production of the resin composition, may be, for example, 20000 MPa or less, or 15000 MPa or less, or 12000 MPa or less, or 10000 MPa or less, or 8000 MPa or less, or 7000 MPa or less. The flexural modulus of the present disclosure is a value measured in accordance with ISO 179.

### <<Rigidity of Polyacetal Resin Composition at High Temperatures>>

The polyacetal resin composition of the present embodiment preferably has a feature of high high-temperature rigidity in order to suppress deformation due to load during gear meshing at high temperatures. Specifically, the storage modulus of the polyacetal resin composition at 120°C is preferably 1,000 MPa or more, or 1,300 MPa or more, or 1,500 MPa or more, or 1,700 MPa or more from the viewpoint of suppressing deformation during gear meshing. The upper limit is not particularly limited, and is preferably 3,000 MPa or less from the viewpoint of maintaining toughness.

In the present embodiment, it is desirable that the polyacetal resin composition have a component composition (i.e., the types and amounts of the components of the polyacetal resin composition) such that when 10% by mass of the fine cellulose fibers are blended, the ratio of the storage modulus at 120°C to the storage modulus at 23°C is 0.4 or more. This index is an index of the dispersibility of the fine cellulose fibers in the composition. The higher the dispersibility, the greater the above ratio tends to be. For example, in the case of a polyacetal resin composition that does not contain fine cellulose fibers, the ratio of the storage modulus at 120°C to the storage modulus at 23°C is less than 0.3. When non-fine cellulose (for example, cellulose powder) is blended, the above ratio is less than 0.4. From the viewpoint of increasing the high-temperature rigidity of the composition with a lesser amount of fine cellulose fibers, the ratio of the storage modulus at 120°C to the storage modulus at 23°C is preferably 0.4 or more, or 0.5 or more. The upper limit is not particularly limited, and is preferably 1.5 or less from the viewpoint of processability.

This storage modulus is a storage modulus when measured under the conditions of a measurement temperature range of 0°C to 150°C (heating rate: 2°C/min), a tensile mode, a vibration frequency of 10Hz, a static load strain of 0.5%, and a dynamic load strain of 0.3% using an ISO multipurpose test specimen having a width of 10 mm and a thickness of 4 mm, using a solid viscoelasticity measuring device. Note that the temperatures of 23°C and 120°C are calculated by interpolating the measured temperatures before and after these temperatures.

### <<Molded Product and Uses Thereof>>

An aspect of the present invention provides a molded product composed of the resin composition of the present disclosure, and a production method for a molded product comprising a molding step of molding the molding component, which is the resin composition of the present disclosure. The polyacetal resin composition of the present embodiment can be molded into various molded products by a conventionally known molding method (for example, injection molding, extrusion molding, compression molding, blow molding, vacuum molding, foam molding, rotational molding, and gas injection molding), and is particularly suitable for injection molding.

### <Profile Molded Product>

In an aspect, the molding method may be profile molding. Specifically, in an aspect, the molded product of the present embodiment may be a profile-molded product. An aspect of the present invention also provides a production method for a profile extrusion molded product, comprising a step of profile-extruding the resin composition of the present embodiment.

A known method can be used for the profile extrusion molding. Specific examples of profile extrusion molding methods include a method in which a resin composition is charged into an extrusion molding machine, kneaded while being heated in the interior thereof, extruded from a profile extrusion die to obtain an uncooled molded product, and the uncooled molded product is then continuously guided through a cooling zone to be cooled to obtain a profile extrusion molded product.

Examples thereof also include a method in which melt-kneading is performed to obtain a resin composition, which is then extruded using a die of a kneading machine as a die for profile extrusion to obtain an uncooled molded product, and the uncooled molded product is continuously guided through a cooling zone to be cooled to obtain a profile extrusion molded product.

The lower limit of the extrusion temperature during the profile extrusion is preferably +5°C, and more preferably +10°C, relative to the melting point when the thermoplastic resin in the resin composition is a crystalline resin, or to the glass transition point when the thermoplastic resin is an amorphous resin. By controlling the lower limit within this range, the productivity of the profile extrusion can be improved. The upper limit of the extrusion temperature during the profile extrusion is preferably +100°C, more preferably +80°C, more preferably +70°C, and more preferably +60°C relative to the melting point when the thermoplastic resin in the resin composition is a crystalline resin, or to the glass transition point when the thermoplastic resin is an amorphous resin. By controlling the upper limit within this range, deterioration of the cellulose fine fibers can be suppressed, whereby the mechanical properties of the resin composition can be maintained, and drawdown of the resin between the profile extrusion die and the cooling zone can be suppressed, whereby the dimensional accuracy of the profile extrusion molded product is suitable.

The cross-sectional shape of the profile extrusion molded product is not particularly limited, and the cross-sectional shape is preferably a sheet shape, a pipe shape, a tube shape, or a square shape. In the case of a sheet shape, the sheet thickness can be 0.2 to 50 mm, and the sheet width can be 10 to 1500 mm. In the case of a pipe or tube shape, the thickness can be 0.1 to 30 mm, and the inner diameter can be 1 to 1000 mm. In the case of a square shape, the angle of the corner can be 30 to 150 degrees. The minimum curvature radius of the valley side of the corner can be 0.1 mm.

### <Printing Material for 3D Printing>

In an aspect, the molding may be 3D printer molding. An aspect of the present invention provides a printing material for 3D printing comprising fine cellulose fibers, a thermoplastic resin, and polyethylene glycol, and a production method thereof. In an aspect, the printing material for 3D printing is composed of the resin composition of the present embodiment. The polyethylene glycol can function as a dispersant for suitably dispersing the fine cellulose fibers in the thermoplastic resin, and the polyethylene glycol can function as a crystallization retardant for the polyacetal, whereby molding shrinkage during 3D printing is suppressed and a shaped object with excellent dimensional accuracy is obtained. The printing material for 3D printing of the present embodiment is advantageous for forming a shaped object with high mechanical properties and excellent dimensional accuracy.

In an aspect, the printing material for 3D printing may have a desired form such as pellets, filaments, or powder, and is preferably in the form of filaments or powder. A known method can be used to mold the resin composition into the printing material for 3D printing of the desired form. For example, the filament may be a monofilament or a multifilament, but a monofilament is preferable from the viewpoint of ease of molding.

The diameter of the filamentary printing material is preferably 0.5 to 5.0 mm, more preferably 1.0 to 3.5 mm, and most preferably 1.5 to 3.0 mm. The length of the filamentary printing material is preferably more than 1 m, more preferably more than 10 m, more preferably more than 100 m, and most preferably more than 300 m. By controlling the shape of the filamentary printing material within this range, it becomes possible to widely select applicable 3D printers, and it becomes possible to appropriately design the shaping time as well as the size and sophistication of the shaped object. In an aspect, the length of the filamentary printing material may be 20,000 m or less.

In an aspect, the filamentary printing material can be produced by heating and melting the resin composition, passing it through a small hole such as a nozzle, followed by cooling and winding. The diameter of the small hole can be appropriately selected in accordance with the diameter of the filament and the winding speed, and from the viewpoint of production efficiency and the frequency of occurrence of filament breakage, it is preferably 0.5 to 10.0 mm, more preferably 0.8 to 5.0 mm, and most preferably 1.0 to 3.0 mm. As a cooling method, a known method such as air cooling or water cooling can be appropriately selected, but air cooling is preferable from the viewpoint of preventing water absorption due to the hydrophilicity of the cellulose fine fibers. From the viewpoint of production efficiency and the frequency of occurrence of filament breakage, the winding speed of the filament is preferably 0.1 to 10 m/sec, more preferably 0.15 to 5 m/sec, and most preferably 0.2 to 1 m/sec. The production device for the filamentary printing material and the production device for the resin composition may be the same or different.

The particle size, particle shape, and aspect ratio of the powder printing material can be appropriately selected in accordance with the 3D printer used. In an aspect, the particle size is preferably 1 to 10,000 µm, more preferably 10 to 500 µm, and most preferably 30 to 200 µm from the viewpoint of handling as a printing material and surface smoothness of the shaped object. The particle shape may be spherical or irregular, but an irregular shape is preferable from the viewpoint of void suppression during modeling. The aspect ratio is preferably 1.001 to 3.0, more preferably 1.01 to 2.0, and most preferably 1.1 to 1.8 from the viewpoint of void suppression by reducing the interparticle gap.

In an aspect, the powder printing material can be produced by pulverizing or reprecipitating the resin composition. The method for pulverizing the resin composition is not particularly limited, and may be wet pulverization, dry pulverization, low-temperature pulverization, freeze pulverization, or heat pulverization. A pulverization medium may be used for the purpose of controlling the shape of the powder printing material.

### <Shaped Object>

An aspect of the present invention provides a shaped object produced by shaping the resin composition (for example, resin composition pellets) or the printing material for 3D printing of the present embodiment using a 3D printer. Another aspect of the present invention provides a production method for a shaped object, comprising a step of shaping the resin composition or the printing material for 3D printing of the present embodiment using a 3D printer. Examples of the shaping method of the 3D printer include a fused deposition modeling method, a stereolithography method, a material jetting method, a powder bonding method, and a powder bed fusion method. When a filamentary printing material is used, the fused deposition modeling method is preferable, and when a powder printing material is used, the powder bonding method and the powder bed fusion method are preferable.

The shaped object may be directly applied to various applications, or may be molded into a desired shape alone or together with other components to produce a desired molded product. The method of combining the components and the molding method is not particularly limited and may be selected in accordance with the desired molded product. Examples the molding method include, but are not limited to, a cutting molding method and a foam molding method. The shaped object or molded product is useful as a substitute for steel plates, fiber-reinforced plastics (for example, carbon fiber reinforced plastics, glass fiber reinforced plastics, etc.), and resin composites containing inorganic fillers. Suitable applications of the printing material for 3D printing, the shaped object, or the molded product include industrial machine parts, general machine parts, automobile, railway, vehicle, ship, and aerospace-related parts, electronic and electrical parts, building and civil engineering materials, daily necessities, sports and leisure goods, wind power generation casing members, and containers and packaging members.

### <Characteristics of Resin Composition, Printing Material for 3D Printing Material, and Shaped Object>

The resin composition, the printing material for 3D printing, and the shaped object may have the following characteristics:

### [Tensile Yield Strength]

In an aspect, the tensile yield strength of the resin composition, printing material for 3D printing, or shaped object may be 20 MPa or more, or 50 MPa or more, or 80 MPa or more, and may be 300 MPa or less, or 200 MPa or less, or 150 MPa or less.

### [Tensile Elongation at Break]

In an aspect, the tensile elongation at break of the resin composition, printing material for 3D printing, or shaped object may be 2% or more, or 3% or more, or 5% or more, and may be 200% or less, or 100% or less, or 20% or less.

### [Flexural Modulus]

In an aspect, the flexural modulus of the resin composition, printing material for 3D printing, or shaped object may be 2.0 GPa or more, or 2.5 GPa or more, or 3.0 GPa or more, or 3.5 GPa or more, or 3.7 GPa or more, or 3.9 GPa or more, and may be 20.0 GPa or less, or 10.0 GPa or less, or 8.0 GPa or less.

### <Uses of Molded Product>

The molded product of the present embodiment can be used for a variety of purposes, such as automobile parts, electric and electronic parts, building materials, lifestyle-related parts, cosmetic parts, medical parts, rails, pipes, sashes, door frames, window frames, handrails, deck materials, fences, and various building materials.

Specifically, examples of automobile parts include interior parts such as inner handles, fuel trunk openers, seat belt buckles, assist wraps, various switches, knobs, levers, and clips, electrical system parts such as meters and connectors, in-vehicle electrical and electronic parts such as audio equipment and car navigation equipment, parts which come into contact with metal such as window regulator carrier plates, and mechanical parts such as door lock actuator parts, mirror parts, wiper motor system parts, and fuel system parts.

Examples of electric and electronic parts include parts or members of equipment that are composed of molded products of the polyacetal resin and which frequently come into contact with metal, such as parts or members of audio equipment, video equipment, OA equipment such as telephones, copy machines, facsimile machines, word processors, computers, and toys, and specifically chassis, gears, levers, cams, pulleys, and bearings.

The molded product can suitably be used in a wide range of lifestyle-related, cosmetic-related, and medical-related parts, such as lighting fixtures, fittings, piping, cocks, faucets, toilet peripheral parts, and other building materials and piping parts, fasteners, stationery, lip balm and lipstick containers, cleaning devices, water purifiers, spray nozzles, spray containers, aerosol containers, general containers, and syringe needle holders.

Among these, it is more preferably usable for gears which are used in high-temperature environments and subject to high loads.

### < Recycling >

In an aspect, the molding component subjected to the molding step includes a recycled material that is a melt-processed product of the molded product. In an aspect, in the molding step, a molding component, which is the resin composition of the present disclosure, is molded to generate each of a plurality of members, and the resin composition for generating one or more of the plurality of members includes a recycled material that is a melt-processed product of one or more of the plurality of members. In other words, when the molded product is composed of plurality of members, one or more of the plurality of members may be recovered and melt-processed to obtain a generated product, which may be used as part or all of one or more of the plurality of molding components for generating each of the plurality of members. The plurality of members may have the same or different compositions. Throughout the present disclosure, "the same composition" means that at least one of the following is satisfied: (1) the constituent monomer species of the polyacetal resin in the resin composition is the same for all members, (2) the MFR of the polyacetal resin in the resin composition is within ±5 g/10 min of the number average value for all members, (3) the weight-average molecular weight of the polyacetal resin in the resin composition is within ±10% of the number average molecular weight of the entirety of members for all members, and (4) the bending elastic modulus of the polyacetal resin in the resin composition is within ±10% of the number average value of the entirety of members for all members, and "different compositions" means that none of (1) to (4) above is satisfied. In an aspect, the plurality of members may be two members.

When the plurality of members have the same composition, it is easy to control the physical properties of the recycled material when these members are included in a single recycled material, which is preferable. Conversely, when the plurality of members have different compositions, these members may each be included in separate recycled materials, or two or more of these members may be included in a single recycled material. In the latter case, the desired physical properties of the recycled material may be achieved by adjusting the mass fraction of each member constituting the recycled material.

In the case where the molding component contains a recycled material, the content ratio of the recycled material in the molding component may be, in an aspect, 5% by mass or more, 10% by mass or more, or 15% by mass or more, and may be, in an aspect, 100% by mass, or 95% by mass or less, or 90% by mass or less, or 85% by mass or less.

### <Sliding Part>

An aspect of the present invention provides an article comprising a first member and a second member which are configured so as to be slidable relative to each other, wherein the first member is composed of a first resin composition, the second member is composed of a second resin composition, and each of the first resin composition and the second resin composition comprises:
(a) 100 parts by mass of a polyacetal resin,
(b) 1 to 150 parts by mass of fine cellulose fibers having a fiber diameter of 2 to 1000 nm, and
(c) 0.1 to 100 parts by mass of polyethylene glycol.

In an aspect, the ratio (A2/A1) of the content ratio (A2) of the fine cellulose fibers in the second resin composition to the content ratio (A1) of the fine cellulose fibers in the first resin composition is 0.5 or more and 1 or less.

The first and/or second resin composition may be the resin composition of the present embodiment. In an aspect, in the first and second resin compositions, the ethylene ratio R (%), which is the ratio of the number of oxyethylene units to the total number of oxymethylene units and oxyethylene units of the (a) polyacetal resin, and the number of oxyethylene repeating units n of the (c) polyethylene glycol may satisfy the relationship of the following formula: $\left(R+0.5\right) / 0.015 \leq n \leq \left(R+10\right) / 0.015 .$

In the present embodiment, the first and second members have a common material composition in that they contain a polyacetal resin, and the content ratio of the fine cellulose fibers satisfies a specific relationship between these members. In recent years, the recycling of resin-based articles has been required due to the increasing interest in environmental issues, and when a sliding part is composed of a plurality of members which slide against each other, it is desirable in terms of recycling efficiency to make these the plurality of members have a common material composition. In the sliding part of the present embodiment, since the first and second members have a common material composition in that they contain a polyacetal resin, even when these members are recycled together (i.e., without being separated from each other), a recycled material that retains the original advantages of the polyacetal resin can be obtained. The first member and the second member may have the same or different compositions in the sense of the present disclosure.

Polyacetal resins are inherently excellent in slidability because they have relatively low coefficients of friction, excellent moldability and suitable surface smoothness of molded products, as well as excellent rigidity, toughness, and abrasion resistance. Fine cellulose fibers are lightweight and have excellent mechanical property-improving effects, and can be finely dispersed in a resin to form molded products with low anisotropy. Since polyacetal resins inherently have excellent rigidity and toughness, combining fine cellulose fibers as a filler with a polyacetal resin is advantageous in that rigidity and toughness can be further improved without incurring the inconveniences that can occur with conventional fillers (in particular, inorganic fillers).

More specifically, fine cellulose fibers are softer than general inorganic fillers, and have suitable affinity with polyacetal resins, allowing them to be uniformly dispersed in a polyacetal resin. Since such fine cellulose fibers do not impair the surface smoothness of the member, and are not likely to be released from the member during repeated sliding, they are unlikely to cause an increase in surface roughness and the generation of abrasion powder, which are the main causes of reduced sliding properties during repeated sliding. For example, since glass fibers, which are inorganic fillers, are coarse and tend to be oriented in the molded product, there are problems in that the surface smoothness of the molded product is reduced, and the sliding property and quietness are reduced, or the anisotropy of the molded product is increased, whereby the molded product can become damaged due to stress concentration in specific portions. Furthermore, inorganic fillers are likely to become abrasion powder and be released when the molded product becomes worn, and may be a factor in the deterioration of the sliding property and quietness due to the promotion of further wear of the molded product. The use of fine cellulose fibers as a filler is advantageous in achieving a high degree of both sliding property and quietness of the sliding part. In an aspect, each member may essentially not contain a filler other than the fine cellulose fibers, or if it contains one, the amount thereof may be such that the effects of the present invention are not impaired.

In the sliding part of the present embodiment, the physical properties (in an aspect, rigidity) of the first member and the second member can be close to each other. This allows the commonality of the material composition of the first and second members, i.e., the advantage of recyclability due to the fact that these members contain polyacetal resin, to be suitably obtained.

The ratio (A2/A1) of the content ratio (A2) of the fine cellulose fibers in the second resin composition to the content ratio (A1) of the fine cellulose fibers in the first resin composition is preferably 0.5 or more, or 0.6 or more, or 0.7 or more from the viewpoint of obtaining suitable durability of the sliding part. The ratio (A2/A1) may be 1 or less. In a preferable aspect, the ratio (A2/A1) is 1 from the viewpoint of recycling efficiency. In another preferable aspect, the ratio (A2/A1) is preferably less than 1, or 0.95 or less, or 0.9 or less from the viewpoint of suppressing adhesive wear between members of the sliding part.

The ratio of the flexural modulus of the second resin composition to the flexural modulus of the first resin composition is preferably 0.5 or more, or 0.6 or more, or 0.7 or more from the viewpoint of obtaining suitable durability and recycling efficiency of the sliding part. Though this ratio may be 1 or less, from the viewpoint of suppressing adhesive wear between members of the sliding part, it is preferably 1 or less, or 0.95 or less, or 0.9 or less.

The first and second resin compositions, in an aspect, can comprise one or more of the components exemplified above with respect to the resin composition of the present disclosure in the manner exemplified above. In an aspect, the first resin composition and the second resin composition have the same composition as each other.

### <Production Method for Sliding Part>

An aspect of the present invention also provides a production method for the sliding part of the present disclosure. In an aspect, the production method for the sliding part comprises the steps of:
molding a first resin composition, which is a molten mixture of a first mixed component comprising a polyacetal resin, fine cellulose fibers, and polyethylene glycol, to obtain the first member, and
molding a second resin composition, which is a molten mixture of a second mixed component comprising a polyacetal resin, fine cellulose fibers, and polyethylene glycol, to obtain the second member, wherein
the first mixed component and/or the second mixed component comprise a recycled material, which is a melt-processed product of the first member and/or the second member.

The content ratio of the recycled material in the first mixed component and/or the second mixed component is preferably 5% by mass or more, or 10% by mass or more, or 15% by mass or more, and is preferably 100% by mass or less, or 95% by mass or less, or 90% by mass or less.

In an aspect, the recycled material can be included in the mixed components by recovering the first member and/or the second member, pulverizing them into a granular or powder form, and then subjecting them to melt-mixing.

Molding of the resin composition can be performed by a conventionally known method using or not using a mold (for example, injection molding, extrusion molding, compression molding, blow molding, vacuum molding, foam molding, rotational molding, gas injection molding, etc.). The sliding part of the present embodiment is an injection molded product in an aspect, and is also a cut product (preferably a cut product from a round bar molded body) in an aspect. The injection molded product can be obtained as a member of a desired shape by feeding the resin composition (for example, resin pellets) obtained by the above-mentioned method into an injection molding machine equipped with a mold of a desired member shape and molding. Furthermore, a cut product from a round bar molded body can be obtained as a member of a desired shape by, for example, feeding resin pellets into an extrusion molding machine and performing round bar extrusion to obtain a round bar-shaped molded body, and then cutting this round bar into a desired member shape. In any molding method, molding of a member from a resin composition can be appropriately performed based on the technical common knowledge of a person skilled in the art. In the case of injection molding or cutting from a round-bar molded product, by controlling the mold surface temperature, injection speed, holding pressure, etc., voids tend not to occur, even in thick members. A more preferable molding method is injection molding in terms of mass production and productivity. In a typical embodiment, the member is a thick gear with a face width of, for example, 2 to 50 mm.

The first member and the second member in the sliding part of the present embodiment may be arranged with or without a friction reducer such as grease. The friction reducer may be applied to at least the meshing surface of each member with the other member. The use of the friction reducer can further improve the slidability, durability, and quietness of the sliding part. As the friction reducer, various known friction reducers can be used, and from the viewpoint of obtaining excellent slidability in a wide temperature environment, it is preferable to include a base oil, a thickener, and an additive. In an aspect, the friction reducer may comprise a base oil containing at least one selected from the group consisting of mineral oil, polyα-olefin oil, and alkyl polyphenyl ether in a proportion of 80% by mass or more, a thickener, and 3 to 10% by mass of a hydrocarbon wax having a melting point or softening point in the range of 70 to 130°C. Examples of the thickener include calcium soap, lithium soap, lithium complex soap, calcium complex soap, aluminum complex soap, urea, PTFE, bentone, phthalocyanine, indanthrene, and silica gel.

In an aspect, the first member and the second member are configured to slide directly relative to each other, i.e., without another component (typically the above-mentioned friction reducer) being present between the first member and the second member. When another component such as a friction reducer is not present, it is advantageous in terms of process efficiency because it is not necessary to remove such component when recycling the members after use. According to the sliding part of the present embodiment, since suitable slidability, durability, and quietness can be obtained even when a friction reducer is not used, the sliding part according to this aspect does not use a friction reducer.

### < <Uses of Sliding Part> >

The uses of the sliding part include those exemplified above for the molded product. In a preferable embodiment, the first member and the second member are gears and the article is a gear system, or the first member and the second member are bearings and the article is a damper.

### <Gear System>

In an aspect, the members are gears, and the sliding part is a gear system. The gears of the present embodiment have excellent mechanical strength, durability, sliding properties, and quietness, and can be used in various aspects. In particular, the gears may be, but are not limited to, helical gears, spur gears, internal gears, rack gears, double helical gears, straight bevel gears, helical bevel gears, spiral bevel gears, crown gears, face gears, screw gears, worm gears, worm wheel gears, hypoid gears, and Novikov gears. The helical gears and spur gears may be a single gear, a two-stage gear, or a combination gear having a structure that is combined in multiple stages from a drive motor to eliminate rotation unevenness and reduce speed.

The gear system according to an aspect comprises a driven gear and a drive gear meshing with the driven gear, wherein one of the driven gear and the drive gear is the first member and the other is the second member. The gear system may further comprise a drive source (for example, a motor) that drives the drive gear.

The gears of the present embodiment, as compared to conventional gears, are remarkably superior in durability and, in an aspect, can be applied to, for example, electric power steering (EPS) systems in automobiles and electric vehicles in general. Electric vehicles include, but are not limited to, senior four-wheel vehicles, motorcycles, and electric two-wheel vehicles. The gears of the present embodiment can be used in, for example, cams, sliders, levers, arms, clutches, felt clutches, idler gears, pulleys, rollers, idler wheels, key stems, key tops, shutters, reels, shafts, joints, axles, bearings, guides, outsert molded resin parts, insert molded resin parts, chassis, trays, and side plates due to the excellent sliding properties and durability thereof.

In an aspect, the gear system may be used in a steering column of a vehicle and may comprise a gear mechanism including a worm wheel as a driven gear and a worm as a drive gear, and a motor as a drive source. Alternatively, in an aspect, the gear system may be used in a steering gear of a vehicle and may comprise a gear mechanism including a pinion as a driven gear and a rack as a drive gear, and a motor as a drive source.

The driven gear and/or the drive gear may be integrated with at least the outer circumferential surface of a metal core. The driven gear may be incorporated into the gear system without the metal core, or may be incorporated into the gear system by being integrated with the outer circumferential surface of the metal core attached to the shaft. The material of the metal core may be stainless steel, iron, steel, aluminum, brass, titanium alloy, nickel alloy, copper alloy, aluminum alloy, or stainless alloy. The integration of the gear with at least the outer circumferential surface of the core can be performed by a method known to a person skilled in the art, but is preferably insert injection molding.

The gears constituting the gear system mesh with each other with or without a friction reducer. The use of a friction reducer improves the durability and quietness of the gear system, but the gear system of the present embodiment can achieve the desired durability and quietness even without the use of a friction reducer. Not using a friction reducer is advantageous in terms of the recyclability of the gear system.

In an aspect, the gear mechanism of the gear system is a rack-and-pinion mechanism composed of a rack and a pinion, or a worm gear mechanism composed of a worm and a worm wheel. Pinions and worm wheels are conventionally cylindrical gears, and it is particularly important that they have suitable mechanical strength, dimensional accuracy, and surface smoothness in order for the gear system to have suitable sliding properties and durability. In an aspect, from the viewpoint of obtaining high sliding properties and high durability, it is preferable that the pinion or the worm wheel be the first member.

### <Characteristics of Sliding Part>

### <Arithmetic Mean Surface Roughness Sa of Sliding Surface>

The arithmetic mean surface roughness Sa of the sliding surface of each member of the sliding part with other members is preferably 3.0 µm or less. Such a low arithmetic mean surface roughness Sa is advantageous in terms of high slidability (hence quietness) and high durability of the sliding part. The arithmetic mean surface roughness Sa is a value obtained by a measurement method conforming to ISO25178, and can be obtained by expanding the arithmetic mean surface roughness Ra to the surface. The arithmetic mean surface roughness Ra is a value obtained by measuring the roughness curve on the surface of the member (the surface of the member can be specified by a person skilled in the art based on the shape of the sliding part), which is a resin molded body, in accordance with JIS B0031, extracting only a reference length in the average line direction of the roughness curve, taking the direction of the average line of this extracted portion as the X axis and the direction of the longitudinal magnification as the Y axis, and expressing the roughness curve as y = f (x), expressed in micrometers (µm) by the following formula (2).
[Math 1] $Ra = \frac{1}{a} {\int }_{0}^{a} \left\{f\left(x\right)\right\} dx$

The arithmetic mean surface roughness Sa is the arithmetic mean surface roughness Ra extended to the surface and is expressed by the following formula (3).
[Math 2] $Sa = \frac{1}{a} {∬}_{a} \left|z\left(x, y\right)\right| dxdy$

The upper limit of the arithmetic mean surface roughness Sa is preferably 0.9 µm, more preferably 0.8 µm, further preferably 0.7 µm, and most preferably 0.6 µm. The lower limit of the arithmetic mean surface roughness Sa is not particularly limited, but from the viewpoint of ease of production, it is preferably, for example, 0.1 µm. The surface roughness can be measured using a commercially available microscope device such as a confocal microscope (for example, TM OPTELICS H1200, manufactured by Lasertec Corporation).

### < Circularity >

When the sliding part is a gear system and the members are gears, the circularity of the gears is preferably 400 µm or less. In an actual use environment, the smaller the circularity, the higher the dimensional uniformity of the gears, and the less likely a large load is applied to a specific tooth (stress concentration), and the more likely durability is improved. The upper limit of the circularity is preferably 400 µm, more preferably 300 µm, further preferably 200 µm, and most preferably 100 µm. The lower limit of the circularity is not particularly limited, and may be, for example, 1 µm from the viewpoint of actual production. The circularity is a value obtained as the total pitch error (µm) of the gear when each tooth tip of a test gear is measured by an image dimension measuring instrument (IM-6000 manufactured by Keyence Corporation). The error of the measured value is expressed in µm units by the LSC method (Least Squares Center method, where the error is the radius difference between a circle circumscribing and a circle inscribing concentrically with a circle that has the smallest sum of squares of deviations). It can be determined that the smaller this value, the higher the circularity. In the present embodiment, since a resin composition which can form a member having small anisotropy is used in the sliding part, the anisotropy of shrinkage is small when forming the members from the resin composition. Such gears which are members having low anisotropy can have excellent (i.e., small) circularity due to uniform shrinkage during molding.

### <Torque>

The sliding part of the present embodiment, and in particular, the gear system, exhibits excellent durability even in a high torque environment, and thus, can be used at a torque of 0.05 N·m or more in an aspect. The torque is preferably 0.1 N·m or more, or 0.5 N·m or more, or 1.0 N·m or more, or 2.0 N·m or more. The upper limit of the torque when using the sliding part of the present embodiment is not particularly limited, and from the viewpoint of durability, is preferably 100 N·m or less, or 50 N·m or less, or 30 N·m or less, or 20 N·m or less.

### <Operating Rotational Speed of Gear>

When the sliding part is a gear system, the durability thereof varies greatly depending on the operating rotational speed of the drive source to which the gears are applied, and it tends to deteriorate easily under a high operating rotational speed environment. Since the gear system of the present embodiment has excellent durability, it also exhibits excellent performance when applied to a drive source with a higher operating rotational speed. In an aspect, the drive source is a motor. The upper limit of the operating rotational speed of the drive source is preferably 15000 rpm or less, or 10000 rpm or less, or 5000 rpm or less. The lower limit of the operating rotational speed is not particularly limited, and since the gear system of the present embodiment has suitable durability, it can be, for example, 10 rpm or more, or 30 rpm or more, or 50 rpm or more, or 80 rpm or more.

### <Gear Module>

When the sliding part is a gear system, the module of the gears may be 0.3 or more. The module is the value obtained by dividing the reference circle diameter of the gear by the number of teeth, and represents the size of the gear. The durability of a gear varies greatly depending on the size of the module. The gear of the present embodiment shows excellent performance over a wide range of module designs. The upper limit of the module is preferably 5.0 or less, 2.0 or less, or 1.0 or less. The lower limit of the module is not particularly limited, and from the viewpoint of good durability of the gear, it is preferably, for example, 0.3 or more.

### <Production Method for Molded Product by Recycling Sliding Parts>

In an aspect, at least a portion of the sliding part of the present disclosure may be recovered and recycled to produce a molded product. The composition and shape of the produced molded product may be appropriately designed as desired. In an aspect, the production method for a molded product comprises a step of molding a resin composition that is a molten mixture of a mixed component including a polyacetal resin, fine cellulose fibers, and polyethylene glycol to obtain a molded product. The mixed component may include a recycled material that is a melt-processed product of the first member and/or the second member of the sliding part of the present disclosure.

In a preferable aspect, from the viewpoint of recyclability, the recycled material is a melt-processed product of the first member and the second member, and the first member and the second member have the same composition. In a preferable aspect, from the same viewpoint, the mixed component has the same composition as the first resin composition and/or the second resin composition.

### EXAMPLES

The present invention will be described in more detail below based on Examples, but the present invention is not limited to these Examples.

### <<Evaluation Methods>>

### <Fine Cellulose Fibers>

### [Diameter and LID of Fine Cellulose Fibers]

The wet cake was diluted to 0.01% by mass with tert-butanol, dispersed using a high-shear homogenizer (product name "ULTRA-TURRAX T18" manufactured by IKA) under processing conditions of 25,000 rpm for 5 minutes, cast onto mica, air-dried, and measured with a high-resolution scanning electron microscope. Measurement was performed by adjusting the magnification so that at least 100 cellulose fibers were observed, and the length (L), major axis (D), and ratio thereof of 100 randomly selected cellulose fibers were determined, and the arithmetic average of the 100 cellulose fibers was calculated.

### [Mw of Fine Cellulose Fibers]

The wet cake was added to tert-butanol, and further dispersed in a mixer or the like until no aggregates were present. The concentration was adjusted to 0.5% by mass relative to 0.5 g of fine cellulose fibers solids. 100 g of the obtained tert-butanol dispersion was filtered with filter paper, dried at 150°C, and the filter paper was peeled off to obtain a sheet. The sheet had an air permeability resistance of 100 sec/100 ml or less per 10 g/m² of sheet basis weight, and was obtained as a porous sheet. 0.88 g of the porous sheet was weighed, cut into small pieces with scissors, lightly stirred, and 20 mL of pure water was then added thereto and allowed to stand for one day. Next, the water and solids were separated by centrifugation. Next, 20 mL of acetone was added thereto, lightly stirred, and allowed to stand for one day. Next, the acetone and solids were separated by centrifugation. Next, 20 mL of N,N-dimethylacetamide was added thereto, lightly stirred, and allowed to stand for one day. After separating the N,N-dimethylacetamide from the solids again by centrifugation, 20 mL of N,N-dimethylacetamide was added thereto, lightly stirred, allowed to stand for one day. The N,N-dimethylacetamide and solids were separated by centrifugation, and 19.2 g of N,N-dimethylacetamide solution prepared so that lithium chloride was 8 mass percent was added to the solids, and the mixture was stirred with a stirrer, and dissolution was confirmed by visual observation. The solution in which the cellulose was dissolved was filtered through a 0.45 µm filter, and the filtrate was used as a sample for gel permeation chromatography. The equipment and measurement conditions used are as follows.
Equipment: Tosoh Corporation HLC-8120 $Column : TSKgel SuperAWM-H \left(6.0 mm ID\times 15 cm\right) \times 2$
Detector: RI detector
Eluent: N,N-dimethylacetamide (lithium chloride 0.2%)
Flow rate: 0.6 mL/min
Calibration curve: Pullulan equivalent

### [Degree of Acetyl Substitution DS of Hydrophobized Fine Cellulose Fibers]

The infrared spectrum of the porous sheet was measured at five points by ATR-IR using a Fourier transform infrared spectrophotometer (FT/IR-6200, manufactured by JASCO Corp.). The infrared spectrum measurement was performed under the following conditions.
Number of accumulations: 64
Wave number resolution: 4 cm⁻¹
Measurement wave number range: 4000 to 600 cm⁻¹
ATR crystal: Diamond
Incident angle: 45°
From the obtained IR spectrum, the IR index was calculated according to the following formula:$IR index = H1730/H1030$
where H1730 and H1030 are the absorbances at 1730 cm⁻¹ and 1030 cm⁻¹ (absorption bands of C-O stretching vibration of the cellulose backbone chain), respectively, provided that the line connecting 1900 cm⁻¹ and 1500 cm⁻¹ and the line connecting 800 cm⁻¹ and 1500 cm⁻¹ are taken as baselines, and the absorbances are calculated with the absorbance set to 0 at these baselines.

The average degree of substitution at each measurement point was calculated from the IR index according to the following formula, and the average value thereof was taken as DS. $DS = 4.13 \times IR index$

### <Resin Composition>

### [Tensile Properties]

Multipurpose test specimens conforming to ISO 294-3 were molded under conditions conforming to JIS K7364-2 using an injection molding machine. Tensile tests conforming to ISO 527 were performed on the molded test samples.

### [Storage Modulus]

Using an injection molding machine, a multipurpose test specimen conforming to ISO294-3 was molded under conditions conforming to JIS K7364-2. The storage modulus thereof was measured under the conditions of tensile mode, measurement temperature range -100°C to 150°C, heating rate: 2°C/min, vibration frequency 10Hz, static load strain 0.5%, and dynamic load strain 0.3%. The storage modulus at 23°C is defined as E' (23°C), and the storage modulus at 120°C is E'(120°C), which are shown in Tables 1 and 2. The ratio of the storage modulus at 120°C to the storage modulus at 23°C is shown in the Example table as RATIO (120°C/23°C).

### [Flexural Modulus]

The multipurpose test specimen obtained above was used and measured in accordance with ISO179.

### <Members and Sliding Part>

### [Coefficient of Friction]

A reciprocating sliding test was conducted on the multipurpose test specimen obtained above (as the first member), using a reciprocating friction and wear tester (Model AFT-15MS manufactured by TOYO PRECISION PARTS MFG. CO., LTD.). The mating material was a pellet-shaped resin composition used as the second resin composition, which was injection molded into a 5 mm diameter ball (as the second member) attached to the tip of a pin. The reciprocating sliding test was carried out with the tip of the pin in contact with the surface of the multipurpose test specimen at a temperature of 23°C, a humidity of 50%, a linear velocity of 30 mm/sec, a reciprocating distance of 10 mm, a load of 19.6 N, and 10,000 reciprocating cycles. The average value of the coefficient of friction after 9,500 to 10,000 reciprocating cycles was taken as the friction coefficient. The smaller the coefficient of friction, the better the sliding properties.

### [Wear Amount]

The wear amount was measured by measuring the wear amount (wear volume) of the sample (i.e., the first member) after the sliding test using a three-dimensional white light interference microscope (Contour GT-X, manufactured by Bruker). The lower the wear amount value, the better the wear resistance and therefore the durability.

### [Quietness]

In the above reciprocating sliding test, the sliding noise during the measurement was evaluated as follows.
Excellent: no squeaking noise
Good: slight squeaking noise occurred
Defective: squeaking noise occurred

### [Pin Damage Resistance]

In the above reciprocating sliding test, the condition of the ball (i.e., the second member) at the tip of the pin after the test was evaluated as follows.
Excellent: substantially no wear, only slight wear at the tip
Good: slight wear of the tip
Defective: distorted shape due to adhesive wear

### Materials used:

### <(a) Polyacetal Resin>

### [Preparation Example A1]

A jacketed twin-shaft paddle type continuous polymerization reactor (manufactured by Kurimoto Ltd., diameter 2B, LID = 14.8) was adjusted to 80°C, and raw materials and the like were fed under the polymerization conditions (feed rate) shown below to carry out the polymerization to provide a polyacetal copolymer.

The unstable terminal groups of the obtained crude polymer were removed under the terminal stabilization conditions shown below to obtain a polyacetal copolymer (polyacetal resin (A-1)) having a content of a comonomer component derived from 1,3-dioxolane of 1 mol% based on the number of moles of trioxane.

### (Polymerization Conditions)

The raw materials were fed to the reactor at the following feed rates:
Trioxane (primary monomer): 3,500 gr/hr
1,3-dioxolane (comonomer): 28.8 gr/hr
Methylal (low molecular weight acetal compound): 2.4 gr/hr
Cyclohexane (organic solvent): 6.5 g/hr
Boron trifluoride-di-n-butyl etherate (polymerization catalyst): 0.15 g/hr (the feed rate was set so that the amount of boron trifluoride was 0.2 × 10⁻⁴ mol per mol of trioxane).

Note that the polymerization catalyst alone was fed in a line separate from the other components.

### (Terminal Stabilization Conditions)

The crude polyacetal copolymer discharged from the polymerization reactor was immersed in an aqueous triethylamine solution (0.5% by mass), and then stirred at room temperature for 1 hour. The resultant was then filtered using a centrifuge and dried under nitrogen at 120°C for 3 hours.

Next, the mixture was fed to a vented twin-screw extruder (LID = 40) set at 200°C, and an aqueous solution of 0.8% by mass triethylamine was added to the terminal stabilization zone so as to achieve an amount of 20 ppm by mass in terms of the mass of nitrogen, and the mixture was stabilized while being degassed under reduced pressure at 90 kPa, and pelletized with a pelletizer. Thereafter, the mixture was dried at 100°C for 2 hours to obtain polyacetal resin (A-1).

### [Preparation Examples A2 to A5]

By adjusting the amount of 1,3-dioxolane added, polyacetal resins A-2 to A-5 having different ethylene ratios were obtained. The melt mass flow rates (MFR) of the obtained polyacetal resins were measured in accordance with ISO1133 (condition D, load 2.16 kgf, cylinder temperature 190°C).

The obtained polyacetal resins are as follows:
(Preparation Example A1) A-1: ethylene ratio 0.3% ((CH₂CH₂):(CH₂) = 0.3:99.7), MFR: 30 g/10 min
(Preparation Example A2) A-2: ethylene ratio 0.5% ((CH₂CH₂):(CH₂) = 0.5:99.5), MFR: 8 g/10 min
(Preparation Example A3) A-3: ethylene ratio 1.0% ((CH₂CH₂):(CH₂) = 1.0:99.0), MFR: 30 g/10 min
(Preparation Example A4) A-4: ethylene ratio 1.5% ((CH₂CH₂):(CH₂) = 1.5:98.5), MFR: 10 g/1 0min
(Preparation Example A5) A-5: ethylene ratio 1.8% ((CH₂CH₂):(CH₂) = 1.8:98.2), MFR: 9 g/10 min

### [Polyacetal Homopolymer]

Tenac 4010 (homopolymer (CH₂CH₂):(CH₂) = 0:100), MFR: 10 g/10 min) manufactured by Asahi Kasei Corporation was used as polyacetal resin A-6.

### <Hydrophobized Fine Cellulose Fibers: Sometimes Referred to by Respective Abbreviations>

### [Preparation Example B1]

Cotton linter pulp was stirred in dimethyl sulfoxide (DMSO) at room temperature for 1 hour at 500 rpm using a single-shaft stirrer (DKV-1 ϕ125 mm dissolver manufactured by IMEX). The mixture was then fed to a bead mill (NVM-1.5 manufactured by IMEX) using a hose pump and circulated for 120 minutes using only DMSO to obtain a defibrated slurry.

11 parts by mass of vinyl acetate and 1.63 parts by mass of sodium hydrogen carbonate were then added to the bead mill device relative to 100 parts by mass of the defibrated slurry, and the mixture was further subjected to circulation operation for 60 minutes to obtain a hydrophobized fine cellulose fiber slurry.

During circulation operation, the rotational speed of the bead mill was 2500 rpm and the peripheral speed was 12 m/s. ϕ2.0 mm zirconia beads were used, and the filling rate was 70% (the slit gap of the bead mill was 0.6 mm). During circulation operation, the slurry temperature was controlled at 40°C using a chiller to absorb the heat generated by friction.

Pure water was added to the obtained hydrophobized fine cellulose fiber slurry in an amount of 192 parts by mass relative to 100 parts by mass of the defibrated slurry, and the mixture was thoroughly stirred and then concentrated in a dehydrator. The obtained wet cake was again dispersed in the same amount of pure water, stirred, and concentrated, and this washing operation was repeated five times in total to ultimately obtain a hydrophobized fine cellulose fiber wet cake having a solid content of 10% by mass.

The characteristics of the resulting hydrophobized fine cellulose fiber wet cake were evaluated, and the following results were obtained.

DS: 0.96, diameter: 65 nm, L/D: approximately 450, Mw: 340,000. These hydrophobized fine cellulose fibers are referred to as CNF (0.96).

### [Preparation Examples B2 and B3]

By adjusting the circulation operation time after adding vinyl acetate and sodium hydrogen carbonate to the bead mill device, the following two types of hydrophobized fine cellulose fiber wet cakes having different hydrophobization degrees were obtained.
(Preparation Example B2) CNF (0.41) DS: 0.41, diameter: 60 nm, L/D: approximately 470, Mw: 370,000
(Preparation Example B3) CNF (1.29) DS: 1.29, diameter: 69 nm, L/D: approximately 430, Mw: 330,000

### <Fine Cellulose Fibers: Hereinafter Sometimes Referred to as CNF(0)>

### [Preparation Example B4]

Cotton linter pulp was stirred in dimethyl sulfoxide (DMSO) at room temperature for 1 hour at 500 rpm using a single-shaft stirrer (DKV-1 ϕ125 mm dissolver manufactured by IMEX). The mixture was then fed to a bead mill (NVM-1.5 manufactured by IMEX) using a hose pump, and subjected to circulation operation for 120 minutes using only DMSO to obtain defibrated slurry. Fine cellulose fiber wet cake (CNF(0)) was obtained by vacuum drying at approximately 40°C using a revolution/rotation stirrer. The characteristics were evaluated, and the following results were obtained.
CNF(0) DS: 0, diameter: 71 nm, L/D: approximately 220, Mw: 250,000

### <(c) Polyethylene Glycol>

PEG-1: Mn = approximately 3,740, number of oxyethylene repeating units = 85
PEG-2: Mn = approximately 6,000, number of oxyethylene repeating units = 135
PEG-3: Mn = approximately 8,800, number of oxyethylene repeating units = 200
PEG-4: Mn = approximately 22,000, number of oxyethylene repeating units = 500
PEG-5: Mn = approximately 30,000, number of oxyethylene repeating units = 700
PEG-6: Mn = approximately 2,200, number of oxyethylene repeating units = 50
PEG-7: Mn = approximately 41,000, number of oxyethylene repeating units = 900
PEG-8: Mn = approximately 17,600, number of oxyethylene repeating units = 400

### <(d) Hindered Phenolic Antioxidant>

Irganox 1010 (manufactured by BASF Japan)
Pentaerythritol tetrakis[3-(3,5-di-t-butyl-4-hydroxyphenyl)propionate]

### <(e) Nitrogen-Containing Compound>

Melamine (reagent)

### <Filler>

Talc: average particle size 4 µm, manufactured by Takehara Chemical Industrial Co., Ltd.
Glass fibers: average fiber diameter 10 µm, manufactured by Asahi Fiberglass Co., Ltd.

### <<Production of Resin Composition>>

### [Examples 1 to 13 and 15 to 20, Comparative Examples 1 to 6]

The wet cake obtained in each of Preparation Examples B 1 to B4 was mixed with polyethylene glycol in the proportions shown in Tables 1 and 2, and dried under reduced pressure using a planetary mixer under the following conditions to obtain a cellulose fiber-containing powder. The end point of drying was the point at which the moisture content of the cellulose fiber-containing powder reached 3% by mass or less (97% by mass or more of solid content), and the moisture content was measured using an infrared moisture analyzer (MX-50 (manufactured by A&D Company, Limited)).
Equipment: Primix Corporation Hivismix 2P-1
Jacket temperature: 80°C
Degree of vacuum: -0.1 MPa
Stirring speed: 50 rpm

The cylinder temperature of a co-rotating twin screw extruder ZSK26MC (manufactured by Coperion) with L/D=48 and one inlet on the upstream side and one in the center of the extruder was set to 200°C, a dry blend of 100 parts by mass of polyacetal resin, 0.2 parts by mass of hindered phenolic antioxidant, and 0.1 parts by mass of nitrogen-containing compound was supplied thereto in a fixed quantity from a loss-in-weight feeder installed at the upstream inlet, the cellulose fiber-containing powder was fed in a fixed amount from a loss-in-weight feeder installed at a central inlet of the extruder so that the amount of fine cellulose fibers in the composition was approximately 10% by mass, the mixture was melt-kneaded, extruded into strands, and then cooled and cut to obtain a pellet-shaped polyacetal resin composition. The downstream of the extruder was equipped with a decompression degassing function to remove air and generated gas from the extruder.

The screw configuration was such that three RKDs were arranged upstream of the central supply port of the extruder, and three RKDs and one LKD were arranged in this order directly before the downstream decompression degassing. The screw rotational speed of the extruder was set to 150 rpm, and the feeder was set to a total extrusion discharge rate of 5 kg/hour. Various tests were carried out using the obtained pellets. The results are shown in Tables 1 and 2.

### [Example 14]

The cellulose wet cake and polyethylene glycol were not dried under reduced pressure in advance using a planetary mixer under the conditions described below. Instead, the components were mixed together during extrusion to obtain a resin composition.

Various tests were carried out using the obtained pellets. As compared with the system in which the cellulose wet cake and polyethylene glycol were dried in advance, the cellulose dispersibility was worse and the rigidity was reduced. In the system in which the cellulose wet cake and polyethylene glycol were dried in advance, it is presumed that the polyethylene glycol contained in the fine cellulose fibers functions as a "priming agent" to facilitate the penetration of the polyacetal resin into the gaps between the fine cellulose fibers, improving the dispersibility of the fine cellulose fibers in the polyacetal resin composite. In this Example, it is considered that the dispersibility was reduced presumably because such an effect was not obtained.

### [Comparative Example 7]

Pellets were obtained in the same manner as Comparative Example 6, except that the polyethylene glycol was changed to an ethylene glycol-propylene glycol copolymer (PEG-PPG) (GL-3000, manufactured by Sanyo Chemical Industries, Ltd.), and various tests were carried out using the obtained pellets.

The results are shown in Tables 1 and 2.

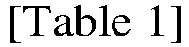

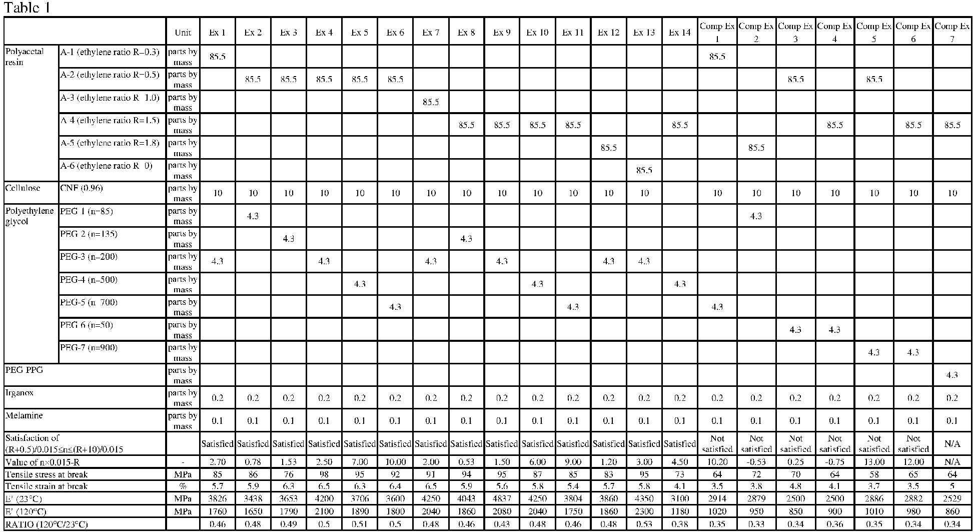

### [Table 2]

**Table 2**

| | | Unit | Ex 15 | Ex 16 | Ex 17 | Ex 18 | Ex 19 | Ex 20 |
|---|---|---|---|---|---|---|---|---|
| Polyacetal | A-2 (ethylene ratio R=0.5) | parts by mass | 85.5 | 85.5 | 85.5 | | | |
| | A-4 (ethylene ratio R=1.5) | parts by mass | | | | 85.5 | 85.5 | 85.5 |
| Cellulose | CNF (0) | parts by mass | 10 | | | 10 | | |
| | CNF (0.41) | parts by mass | | 10 | | | 10 | |
| | CNF (1.29) | parts by mass | | | 10 | | | 10 |
| Polyethylene glycol | PEG-3 (n=200) | parts by mass | 4.3 | 4.3 | 4.3 | 4.3 | 4.3 | 4.3 |
| Irganox | | parts by mass | 0.2 | 0.2 | 0.2 | 0.2 | 0.2 | 0.2 |
| Melamine | | parts by mass | 0.1 | 0.1 | 0.1 | 0.1 | 0.1 | 0.1 |
| Satisfaction of (R+0.5)/0.015≤n≤(R+10)/0.015 | | | Satisfied | Satisfied | Satisfied | Satisfied | Satisfied | Satisfied |
| Value of n×0.015-R | | - | 2.50 | 2.50 | 2.50 | 1.50 | 1.50 | 1.50 |
| Tensile stress at break | | MPa | 78 | 80 | 88 | 75 | 78 | 90 |
| Tensile strain at break | | % | 6.3 | 6.4 | 6.7 | 6.8 | 6.3 | 6.3 |
| E' (23°C) | | MPa | 2349 | 2978 | 2936 | 2318 | 3156 | 3109 |
| E' (120°C) | | MPa | 1010 | 1370 | 1380 | 1020 | 1420 | 1430 |
| RATIO (120°C/23°C) | | - | 0.43 | 0.46 | 0.47 | 0.44 | 0.45 | 0.46 |

### <Production of Sliding Part>

### [Examples 21 to 27, Comparative Examples 8 to 11]

Using a twin-screw extruder (TEM-26SS extruder (LID = 48, vented) manufactured by Toshiba Machine Co., Ltd.), the cylinder temperature was set to 200°C, the components shown in Table 3 were mixed together and fed into the main throat section of the extruder using a quantitative feeder, the resin mixture was extruded into strands at an extrusion rate of 15 kg/hour and a screw rotational speed of 250 rpm, the mixture was quenched in a strand bath and cut with a strand cutter to obtain a pellet-shaped resin composition.

The resin compositions were used in the combinations shown in Table 4 to prepare sliding parts, which were then evaluated. The evaluation results are shown in Table 4.

### [Table 3]

**Table 3**

| | | Unit | Prep Ex 1 | Prep Ex 2 | Prep Ex 3 | Prep Ex 4 | Prep Ex 5 | Prep Ex 6 | Prep Ex 7 | Comp Prep Ex 1 | Comp Prep Ex 2 |
|---|---|---|---|---|---|---|---|---|---|---|---|
| Polyacetal resin | A-2 (ethylene ratio R=0.5) | parts by mass | 85.5 | 85.5 | | | | 88.3 | 82.6 | | |
| | A-4 (ethylene ratio R=1.5) | parts by mass | | | 85.5 | 85.5 | | | | 69.7 | 74.7 |
| | A-6 (ethylene ratio R=0) | parts by mass | | | | | 85.5 | | | | |
| Cellulose | CNF (0.96) | parts by mass | 10 | 10 | 10 | 10 | 10 | 8 | 12 | | |
| Talc | | parts by mass | | | | | | | | 20 | |
| Glass fibers | | parts by mass | | | | | | | | | 20 |
| Polyethylene glycol | PEG-3 (n=200) | parts by mass | 4.3 | | 4.3 | | 4.3 | 3.4 | 5.1 | | |
| | PEG-8 (n=400) | parts by mass | | 4.3 | | 4.3 | | | | | |
| Irganox | | parts by mass | 0.2 | 0.2 | 0.2 | 0.2 | 0.2 | 0.2 | 0.2 | 0.2 | 0.2 |
| Melamine | | parts by mass | 0.1 | 0.1 | 0.1 | 0.1 | 0.1 | 0.1 | 0.1 | 0.1 | 0.1 |
| Flexural modulus | | MPa | 5000 | 4600 | 4800 | 4650 | 5000 | 4800 | 5300 | 4800 | 6000 |

### [Table 4]

**Table 4**

| | First resin composition | Second resin composition | Reciprocating sliding test | | | |
|---|---|---|---|---|---|---|
| | | | Coefficient of friction [-] | Wear volume [mm³] | Quietness | Pin damage resistance |
| Ex 21 | Prep Ex 1 | Prep Ex 1 | 0.15 | 0.103 | Excellent | Excellent |
| Ex 22 | Prep Ex 2 | Prep Ex 2 | 0.13 | 0.084 | Excellent | Excellent |
| Ex 23 | Prep Ex 3 | Prep Ex 3 | 0.15 | 0.112 | Excellent | Excellent |
| Ex 24 | Prep Ex 4 | Prep Ex 4 | 0.14 | 0.094 | Excellent | Excellent |
| Ex 25 | Prep Ex 5 | Prep Ex 5 | 0.14 | 0.087 | Excellent | Excellent |
| Ex 26 | Prep Ex 1 | Prep Ex 6 | 0.18 | 0.167 | Excellent | Excellent |
| Ex 27 | Prep Ex 7 | Prep Ex 1 | 0.12 | 0.086 | Excellent | Excellent |
| Comp Ex 8 | Polyacetal resin A-4 | Polyacetal resin A-4 | 0.40 | 1.340 | Defective | Defective |
| Comp Ex 9 | Polyacetal resin A-6 | Polyacetal resin A-6 | 0.43 | 1.480 | Defective | Defective |
| Comp Ex 10 | Comp Prep Ex 1 | Comp Prep Ex 1 | 0.52 | 4.721 | Defective | Defective |
| Comp Ex 11 | Comp Prep Ex 2 | Comp Prep Ex 2 | 0.48 | 1.810 | Defective | Defective |

### [Example 28]

The resin composition pellets of Example 4 were used to carry out a profile extrusion molding. A single-screw extruder having a diameter of 40 mm and equipped with a die having the cross-sectional shape shown in FIG. 1 (the numerical values in the figure are in millimeters) was used. The pellets were extruded at a molding temperature of 190°C and a screw rotational speed of 20 rpm, and then shaped using a sizing die having the same cross section as the die in a 2 m long water tank filled with cooling water at a water temperature of 25°C to obtain a profile extrusion molded product. Profile extrusion molding was carried out without any problems.

### [Example 29]

Profile extrusion molding was carried out in the same manner as in Example 28 using the resin composition pellets formed in such a manner that the polyacetal resin of Example 4 was replaced with a glass fiber reinforced polyacetal resin (Tenac-C GN752, manufactured by Asahi Kasei Corporation), and the amount of fine cellulose fibers in the composition was 5% by mass, to obtain a profile extrusion molded product. Profile extrusion molding was carried out without any problems.

### [Example 30]

Profile extrusion molding was carried out in the same manner as in Example 28, using the resin composition pellets formed similar to Example 4 in such a manner that the amount of carbon fibers (TORAYCA T300 manufactured by Toray Industries, Inc.) was changed to 10% by mass in the composition, and the amount of fine cellulose fibers was changed to 5% by mass in the composition, to obtain a profile extrusion molded product. Profile extrusion molding was carried out without any problems.

### [Example 31]

Using the resin composition pellets of Example 4 and a 3-devo filament extruder (nozzle diameter 1.7 mm) manufactured by 3D Printing Corporation, the monofilament as the filament printing material was obtained under air-cooling conditions by drawing the filament under automatic control conditions of a nozzle temperature of 210°C, a screw rotational speed of 3.5 rpm, and a winding speed of 0.02 to 0.1 m/s. Next, the filament printing material was printed using a FUNMAT HT fused deposition modeling 3D printer manufactured by Canon Inc. under conditions of a nozzle temperature 210°C, a platform temperature of 80°C, a layer height of 0.3 mm, and a shaping speed of 30 mm/sec to obtain a shaped object of the same shape as a multipurpose test specimen conforming to ISO294-3. Shaping by 3D printing was carried out without any problems.

### INDUSTRIAL APPLICABILITY

The composition containing a polyacetal resin and fine cellulose fibers, as provided by an aspect of the present invention, can be suitably used in a wide range of applications, and in particular, in high-load applications in high-temperature environments.

## Claims

1. A polyacetal resin composition, comprising;
(a) 100 parts by mass of a polyacetal resin,
(b) 1 to 150 parts by mass of fine cellulose fibers having a fiber diameter of 2 to 1000 nm, and
(c) 0.1 to 100 parts by mass of polyethylene glycol, wherein
an ethylene ratio R (%), which is a ratio of a number of oxyethylene units to a total number of oxymethylene units and oxyethylene units of the (a) polyacetal resin, and a number of oxyethylene repeating units n of the (c) polyethylene glycol satisfy the relationship of the following formula: $\left(R+0.5\right) / 0.015 \leq n \leq \left(R+10\right) / 0.015 .$

2. The polyacetal resin composition according to Claim 1, wherein the ethylene ratio R is 0.3% to 1.8%.

3. The polyacetal resin composition according to Claim 1, wherein the (b) fine cellulose fibers are hydrophobized fine cellulose fibers.

4. The polyacetal resin composition according to Claim 3, wherein an average degree of substitution (DS) of the hydrophobized fine cellulose fibers is 0.5 to 1.5.

5. The polyacetal resin composition according to any one of Claim 1, wherein the number of oxyethylene repeating units of the (c) polyethylene glycol is 80 to 700.

6. The polyacetal resin composition according to Claim 1, having a storage modulus at 120°C of 1000 MPa or more.

7. The polyacetal resin composition according to Claim 1, having a component composition in which a ratio of the storage modulus at 120°C to a storage modulus at 23°C when formulating the fine cellulose fibers at 10% by mass is 0.4 or more.

8. A method of producing a polyacetal resin composition, comprising melt-kneading:
(a) 100 parts by mass of a polyacetal resin,
(b) 1 to 150 parts by mass of fine cellulose fibers having a fiber diameter of 2 to 1000 nm,
(c) 0.1 to 100 parts by mass of polyethylene glycol,
(d) 0.01 to 3 parts by mass of a hindered phenolic antioxidant, and
(e) 0.01 to 3 parts by mass of at least one nitrogen-containing compound selected from the group consisting of aminotriazine compounds, guanamine compounds, hydrazide compounds, and polyamides, wherein
an ethylene ratio R (%), which is a ratio of a number of oxyethylene units to a total number of oxymethylene units and oxyethylene units of the (a) polyacetal resin, and a number of oxyethylene repeating units n of the (c) polyethylene glycol satisfy the relationship of the following formula: $\left(R+0.5\right) / 0.015 \leq n \leq \left(R+10\right) / 0.015 .$

9. A method of producing a molded product, comprising a molding step of molding a molding component, which is the polyacetal resin composition according to any one of Claims 1 to 7.

10. The method according to Claim 9, wherein the molding component comprises a recycled material, which is a melt-processed product of the molded product.

11. The method according to Claim 10, wherein the molded product is composed of a plurality of members having the same or different compositions,
in the molding step, the molding component is molded to generate each of the plurality of members, and
the polyacetal resin composition for generating one or more of the plurality of members comprises a recycled material, which is a melt-processed product of one or more of the plurality of members.

12. The method according to Claim 10, wherein a content of the recycled material in the molding component is 5% by mass to 100% by mass.

13. An article, comprising a first member and a second member which are configured so as to be slidable relative to each other, wherein
the first member is composed of a first resin composition,
the second member is composed of a second resin composition,
each of the first resin composition and the second resin composition comprises:
(a) 100 parts by mass of a polyacetal resin,
(b) 1 to 150 parts by mass of fine cellulose fibers having a fiber diameter of 2 to 1000 nm, and
(c) 0.1 to 100 parts by mass of polyethylene glycol, and
a ratio (A2/A1) of a content ratio (A2) of the fine cellulose fibers in the second resin composition to a content ratio (A1) of the fine cellulose fibers in the first resin composition is 0.5 or more and 1 or less.

14. The article according to Claim 13, wherein the ratio (A2/A1) of the content ratio (A2) of the fine cellulose fibers in the second resin composition to the content ratio (A1) of the fine cellulose fibers in the first resin composition is 1.

15. The article according to Claim 14, wherein the first resin composition and the second resin composition have the same composition.

16. The article according to Claim 13, wherein an ethylene ratio R (%), which is a ratio of a number of oxyethylene units to a total number of oxymethylene units and oxyethylene units of the (a) polyacetal resin, and a number of oxyethylene repeating units n of the (c) polyethylene glycol satisfy the relationship of the following formula: $\left(R+0.5\right) / 0.015 \leq n \leq \left(R+10\right) / 0.015 .$

17. The article according to Claim 13, wherein the first member and the second member are gears, and the article is a gear system.

18. The article according to Claim 13, wherein the first member and the second member are bearings, and the article is a damper.

19. The article according to Claim 13, wherein the first member and the second member are configured to slide directly relative to each other.

20. A method of producing the article according to any one of Claims 13 to 19, the method comprising:
a step of molding a first resin composition, which is a molten mixture of a first mixed component comprising a polyacetal resin, fine cellulose fibers, and polyethylene glycol, to obtain the first member, and
a step of molding a second resin composition, which is a molten mixture of a second mixed component comprising a polyacetal resin, fine cellulose fibers, and polyethylene glycol, to obtain the second member, wherein
the first mixed component and/or the second mixed component comprise a recycled material, which is a melt-processed product of the first member and/or the second member.

21. A method of producing a molded product, the method comprising:
a step of molding a resin composition, which is a molten mixture of a mixed component comprising a polyacetal resin, fine cellulose fibers, and polyethylene glycol, to obtain a molded product, wherein
the mixed component comprises a recycled material, which is a melt-processed product of the first member and/or the second member of the article according to any one of Claims 13 to 19.

22. The method according to Claim 21, wherein the recycled material is a melt-processed product of the first member and the second member, and
the first resin composition and the second resin composition have the same composition.

23. The method according to Claim 21, wherein the mixed component has the same composition as the first resin composition and/or the second resin composition.

24. A molded product obtained by molding the polyacetal resin composition according to any of Claims 1 to 7.

25. The molded product according to Claim 24, which is a profile extrusion molded product.

26. A method of producing a profile extrusion molded product, comprising:
a step of profile-extruding the polyacetal resin composition according to any of Claims 1 to 7.

27. A printing material for 3D printing, which is composed of the polyacetal resin composition according to any one of Claims 1 to 7.

28. The printing material for 3D printing according to Claim 27, which is in a filament or powder form.

29. A shaped object produced by shaping the polyacetal resin composition according to any one of Claims 1 to 7 or the printing material for 3D printing according to Claim 27 using a 3D printer.

30. A method of producing a shaped object, the method comprising:
a step of shaping the polyacetal resin composition according to any of Claims 1 to 7 or the printing material for 3D printing according to Claim 27 using a 3D printer.

31. A cellulose fiber-containing powder for a polyacetal resin composition, the cellulose fiber-containing powder comprising:
(b) fine cellulose fibers having a fiber diameter of 2 to 1000 nm, and
(c) polyethylene glycol, wherein
the (c) polyethylene glycol is polyethylene glycol in which an ethylene ratio R (%), which is a ratio of a number of oxyethylene units to a total number of oxymethylene units and oxyethylene units of a polyacetal resin comprised in the polyacetal resin composition, and a number of oxyethylene repeating units n of the (c) polyethylene glycol satisfy the relationship of the following formula: $\left(R+0.5\right) / 0.015 \leq n \leq \left(R+10\right) / 0.015 .$

32. A method of producing a cellulose fiber-containing powder for a polyacetal resin composition, wherein
the cellulose fiber-containing powder comprises:
(b) fine cellulose fibers having a fiber diameter of 2 to 1000 nm, and
(c) polyethylene glycol, wherein
the method comprises a mixing step of mixing the (b) fine cellulose fibers and the (c) polyethylene glycol to obtain a cellulose fiber-containing powder, and
the (c) polyethylene glycol is selected such that an ethylene ratio R (%), which is a ratio of a number of oxyethylene units to a total number of oxymethylene units and oxyethylene units of a polyacetal resin comprised in the polyacetal resin composition, and a number of oxyethylene repeating units n of the (c) polyethylene glycol satisfy the relationship of the following formula: $\left(R+0.5\right) / 0.015 \leq n \leq \left(R+10\right) / 0.015 .$

33. A method of producing a polyacetal resin composition, the method comprising:
a powder preparation step for obtaining a cellulose fiber-containing powder comprising:
(b) fine cellulose fibers with a fiber diameter of 2 to 1000 nm, and
(c) polyethylene glycol, and
a resin composition preparation step of mixing the cellulose fiber-containing powder and (a) a polyacetal resin to obtain a polyacetal resin composition, wherein
the (a) polyacetal resin is selected such that an ethylene ratio R (%), which is a ratio of a number of oxyethylene units to a total number of oxymethylene units and oxyethylene units of the (a) polyacetal resin, and a number of oxyethylene repeating units n of the (c) polyethylene glycol satisfy the relationship of the following formula: $\left(R+0.5\right) / 0.015 \leq n \leq \left(R+10\right) / 0.015 .$
